# FASCICULE DE BREVET EUROPEEN

(11) **EP 4 059 180 B1**
(45) Date de publication et mention de la délivrance du brevet: **03.01.2024**
(21) Numéro de dépôt: 20803193.0
(22) Date de dépôt: 12.11.2020
(51) Int. Cl.: H04L 7/02, H04L 7/04, H04W 56/00, H04L 1/18

(54) **PROCÉDÉ DE SYNCHRONISATION D'UN SYSTÈME DE COMMUNICATION BASÉ SUR LA RETRANSMISSION DE DONNÉES**
VERFAHREN ZUR SYNCHRONISATION EINES NACHRICHTENÜBERTRAGUNGSSYTEMS BERUHEND AUF WIEDERHOLTE ÜBERTRAGUNG VON DATEN
METHOD OF SYNCHRONIZING A COMMUNICATION SYSTEM BASED ON THE RETRANSMISSION OF DATA

(30) Priorité: 13.11.2019 FR 1912645
(43) Date de publication de la demande: 21.09.2022
(73) Titulaire: Université Grenoble Alpes, 38400 Saint-Martin-d'Hères (FR); Institut Polytechnique de Grenoble, 38000 Grenoble (FR); Centre national de la recherche scientifique, 75016 Paris (FR); Université Savoie Mont Blanc, 73000 Chambéry (FR)
(72) Inventeur: GARSAULT, Jules, 38100 GRENOBLE (FR); NOVAKOV, Emil, 38330 SAINT NASAIRE LES EYMES (FR); MAURY, Ghislaine, 38130 ECHIROLLES (FR)
(74) Mandataire: Hautier IP
(86) Numéro de dépôt international: PCT/EP2020/081906
(87) Numéro de publication internationale: WO 2021/094449

(56) Documents cités:
- WO-A1-2015/150488
- US-A1- 2008 165 059
- US-A1- 2008 165 910
- STIFFLER J: "Synchronization methods for block codes", IRE TRANSACTIONS ON INFORMATION THEORY, IEEE, USA, vol. 1, no. 5, 1 septembre 1962 (1962-09-01), pages 25-34, XP011217341, ISSN: 0096-1000

## Description

### DOMAINE TECHNIQUE DE L'INVENTION

L'invention concerne le domaine de la synchronisation d'un système de communication radiofréquence (RF). La synchronisation est plus particulièrement basée sur la transmission répétée de données au niveau de l'émetteur et le moyennage synchronisé de celles-ci au niveau du récepteur. Elle trouve pour application particulièrement avantageuse la communication de signaux de données courts dans un environnement bruité.

### ÉTAT DE LA TECHNIQUE

L'invention est susceptible de s'appliquer sur la plupart des systèmes de communication radio (LoRa, SigFox, systèmes classiques, ...). Elle trouvera à s'appliquer particulièrement avantageusement à des applications bas débit, ainsi qu'à des communications dans des bandes passantes étroites pour lesquelles la puissance en émission est limitée par les régulateurs de télécommunication (ETSI, FCC ...). De telles bandes sont par exemple les bandes ISM (industriel, scientifique et médical) qui sont des bandes de fréquences utilisées pour des applications industrielles, scientifiques, médicales, domestiques ou similaires.

On s'intéressera notamment à améliorer la qualité, la portée et la fiabilité de liaison RF. L'invention sera appliquée pour faire les mises à jour des logiciels, établir la communication en zone bruitée, dense ou isolée, et permettre un contrôle-commande bidirectionnel sur des équipements. Plus particulièrement, on s'intéressera à des applications telles que le relevé à distance de compteurs d'eau, de gaz, d'électricité ou tous types d'équipements qui transmettent ou reçoivent des informations espacées dans le temps et avec un faible débit. On souhaite par exemple que chaque compteur soit équipé d'un émetteur radio (avec une liaison bidirectionnelle qui donne la possibilité de réaliser les mises à jour) afin d'émettre des informations pour permettre un relevé du compteur.

Le moyennage synchronisé (ou « Time Synchronous Averaging (TSA) » selon la terminologie anglo-saxonne) est une technique puissante pour le traitement de signaux périodiques qui est capable d'améliorer le rapport signal à bruit (ou « Signal-to-Noise Ratio (SNR) » selon la terminologie anglo-saxonne) jusqu'à extraire des données d'un signal périodique dont la puissance peut être inférieure au bruit qui lui est superposé lors de sa transmission RF. Le gain potentiellement atteint par cette méthode de communication est en effet théoriquement très grand. Toutefois, obtenir ce gain nécessite d'atteindre et maintenir la synchronisation entre émetteur et récepteur. Plus particulièrement, une synchronisation non seulement en phase, mais également une synchronisation en fréquence, doivent être atteintes et maintenues. En général, le gain apporté par cette méthode est fortement limité par le décalage d'horloges entre récepteur et émetteur (c'est-à-dire par les difficultés d'assurer la synchronisation en fréquence entre récepteur et émetteur).

Un exemple de procédé de synchronisation d'un système de communication radiofréquence basé sur la retransmission de données est notamment connu du document de brevet WO 2015/150488 A1. Au niveau de l'émetteur, il repose sur l'émission d'un bloc de données comprenant un mot de préambule connu du récepteur, suivi d'un mot de données répété à l'identique plusieurs fois. Au niveau du récepteur, il repose sur la détection du mot de préambule pour synchroniser le récepteur sur l'émetteur, puis sur le moyennage synchronisé des répétitions du mot de données pour retrouver les données émises. L'efficacité de cette technique est limitée par la méthode de synchronisation mise en oeuvre.

US 2008/165059 A1 (KARR LAWRENCE J [US]) 10 juillet 2008 (2008-07-10) divulgue la transmission de données numériques à émettre sous forme d'un signal radiofréquence depuis un émetteur vers un récepteur. De blocs originels sont répétés, certains sont modifiés et d'autres blocs retransmis de la séquence sont modifiés par inversion.

STIFFLER J: "Synchronization methods for block codes", IRE TRANSACTIONS ON INFORMATION THEORY, IEEE, USA, vol. 1, no. 5, 1 septembre 1962 (1962-09-01), pages 25-34, divulgue transmission par radiofréquence. Si la synchronisation doit être réalisée en envoyant continuellement une forme d'onde particulière et en déterminant sa phase au niveau du récepteur, la forme d'onde optimale est celle qui présente une corrélation croisée minimale avec ses propres permutations cycliques.

Un objet de la présente invention est donc de proposer un procédé de synchronisation d'un système de communication radiofréquence basé sur la retransmission de données qui soit amélioré, notamment en termes de sensibilité et par voie en termes de bilan de liaison, ce qui est susceptible d'augmenter la portée de communication dans certaines conditions de propagation. Un autre objet de la présente invention est de proposer un procédé de synchronisation permettant la transmission de données y compris lorsque le bruit est plus fort que le signal, éventuellement de très faible amplitude, auquel il se superpose, c'est-à-dire en cas de rapport signal-sur-bruit inférieur à 1, voire négatif (en dB). Un autre objet de la présente invention est de permettre d'assurer une communication bidirectionnelle telle qu'utilisée pour l'internet des objets (ou « Internet of Things (loT) » selon la terminologie anglo-saxonne) en gardant le niveau de puissance du signal conforme aux normes imposées, par exemple par l'Institut européen des normes de télécommunications ou ETSI (pour « European Télécommunications Standards Institute » selon la terminologie anglo-saxonne) ou la Commission Fédérale des Communications ou FCC (pour « Fédéral Communications Commission » selon la terminologie anglo-saxonne).

Les autres objets, caractéristiques et avantages de la présente invention apparaîtront à l'examen de la description suivante et des dessins d'accompagnement. Il est entendu que d'autres avantages peuvent être incorporés.

### RÉSUMÉ DE L'INVENTION

Pour atteindre cet objectif, selon un premier aspect, la présente invention prévoit un procédé de traitement de données numériques à émettre sous forme d'un signal radiofréquence depuis un émetteur vers un récepteur, le procédé comprenant les étapes suivantes :
a) Regrouper les données numériques dans un bloc de données, dit originel, ayant une taille en bits déterminée,
b) Générer, à partir du bloc de données originel, une pluralité de blocs de données dits secondaires, chaque bloc de données secondaire étant obtenu par permutation, selon un algorithme et des paramètres déterminés, des données numériques regroupées dans le bloc originel, l'algorithme étant de préférence tel que chaque bloc secondaire généré est différent des autres blocs secondaires de la pluralité, et
c) Construire une trame de données comprenant une succession d'un nombre déterminé de blocs secondaires parmi la pluralité de blocs secondaires précédemment générée, la trame ainsi construite définissant le signal radiofréquence à émettre.

Selon un deuxième aspect, l'invention prévoit un procédé de traitement d'un signal radiofréquence reçu par un récepteur, le signal radiofréquence ayant été défini à partir d'une trame de données comprenant une succession d'un nombre déterminé de blocs de données dits secondaires, chaque bloc de données secondaire ayant été obtenu par permutation, selon un algorithme et des paramètres déterminés, de données numériques préalablement regroupées dans un bloc dit originel ayant une taille en bits déterminée, le procédé comprenant les étapes suivantes :
a) Échantillonner le signal radiofréquence avec une fréquence de sur-échantillonnage définie par le récepteur,
b) Enregistrer au fur et à mesure les échantillons dans une mémoire tampon,
c) Parmi une série d'échantillons enregistrés ayant une taille au moins égale à la taille en bits de chaque bloc secondaire que multiplie le nombre de blocs secondaires dans la trame et un nombre présumé d'échantillons par bit choisi parmi un ensemble comprenant une valeur nominale correspondant à une fréquence de sur-échantillonnage nominale du récepteur, au moins une valeur inférieure à ladite valeur nominale et au moins une valeur supérieure à ladite valeur nominale :
   i. Sélectionner une séquence d'échantillons à partir d'un échantillon donné et à intervalle régulier de taille égale audit nombre présumé d'échantillons par bit,
   ii. Séparer la séquence d'échantillons sélectionnée en plusieurs blocs d'échantillons dits tertiaires, le nombre de blocs tertiaires étant égal au nombre de blocs secondaires dans la trame,
   iii. Pour chaque bloc tertiaire, générer un bloc d'échantillons dit quaternaire par permutation des échantillons du bloc tertiaire entre eux, cette permutation étant l'inverse de celle préalablement effectuée sur le bloc originel pour obtenir le bloc secondaire correspondant, puis
   iv. Répartir les blocs quaternaires en au moins deux groupes,
   v. Par groupe, calculer un bloc dit moyen à partir des blocs quaternaires,
   vi. Calculer une mesure de corrélation entre chaque paire de blocs moyens précédemment calculés,
   vii. Sauvegarder la ou les mesures de corrélation précédemment calculées en associant chaque mesure de corrélation à un indice de l'échantillon donné à partir duquel la sélection a été réalisée et au nombre présumé d'échantillons par bit, puis
   viii. Recommencer les étapes i à vii à partir d'au moins un autre échantillon que l'échantillon à partir duquel la précédente sélection a été réalisée,
d) Pour au moins une autre valeur du nombre présumé d'échantillons par bit choisie parmi l'ensemble comprenant une valeur nominale correspondant à une fréquence de sur-échantillonnage nominale du récepteur, au moins une valeur inférieure à ladite valeur nominale et au moins une valeur supérieure à ladite valeur nominale, recommencer l'étape c, de sorte à sauvegarder les mesures de corrélation calculées, en associant chaque mesure de corrélation à l'indice de l'échantillon à partir duquel la sélection a été réalisée et au nombre présumé d'échantillons par bit considéré,
e) Déterminer, parmi les mesures de corrélation sauvegardées, la mesure correspondant à une plus grande corrélation entre blocs moyens, et récupérer l'indice de l'échantillon et le nombre présumé d'échantillons par bit associés à cette mesure, puis
f) Identifier la séquence d'échantillons sélectionnée à partir de l'indice de l'échantillon associé à cette mesure et à intervalle régulier de taille égale au nombre présumé d'échantillons par bit associé à cette mesure, comme étant représentative d'une succession de blocs de données originels correspondant à la succession de blocs de données secondaires à partir de laquelle la trame de données a été construite.

Notons ici que :
- ladite valeur nominale correspondant à la fréquence de sur-échantillonnage nominale du récepteur peut dépendre de la fréquence de sur-échantillonnage présumée ; et/ou
- chaque séquence d'échantillons sélectionnés a la taille en bits de la trame ; et/ou
- chaque bloc tertiaire comprend un nombre d'échantillons égal au nombre de bits dans chaque bloc secondaire ; et/ou
- ladite permutation inverse est définie selon l'algorithme et les paramètres déterminés ayant permis d'obtenir le bloc secondaire correspondant ; et/ou
- le calcul du bloc dit moyen à partir des blocs quaternaires est réalisée par une moyenne arithmétique de leurs énièmes échantillons (en additionnant leurs énièmes échantillons entre eux, puis en divisant le résultat de chaque addition par le nombre de blocs quaternaires dans le groupe), chaque bloc moyen comprenant ainsi un nombre d'échantillons moyennés égal au nombre d'échantillons dans chaque bloc quaternaire.

La technique de communication introduite ci-dessus prévoit l'injection au niveau de l'émetteur et l'utilisation, au niveau du récepteur, d'informations supplémentaires aux données à communiquer, pour la synchronisation entre émetteur et récepteur. La technique de communication proposée est basée, non seulement sur la retransmission de mêmes données par l'émetteur, mais également sur la permutation des blocs de données avant leur communication. Ainsi, une synchronisation précise en phase et en fréquence est obtenue qui permet in fine de retrouver, par moyennage synchronisé, les données à communiquer, même lorsque celles-ci sont significativement bruitées.

De manière facultative, l'invention selon son premier aspect peut en outre présenter au moins l'une quelconque des caractéristiques suivantes :
La trame de données peut ne comprendre que ladite succession de blocs secondaires, et être exempte d'autres données telles que des données constituant un mot de préambule ;
Les blocs de données secondaires de la trame de données sont de préférence adjacents deux à deux ;
L'étape consistant à générer une pluralité de blocs de données secondaires peut comprendre les sous-étapes consistant à :
   - Découper le bloc de données originel en au moins trois sous-blocs de sorte qu'au moins un sous-bloc comprenne au moins deux bits, au moins deux sous-blocs comprenant potentiellement un nombre différent de bits, et
   - Permuter au moins deux des sous-blocs entre eux,
   ces sous-étapes étant de préférence répétées en variant le nombre de sous-blocs et/ou le nombre de bits d'au moins deux sous-blocs.

De manière facultative, l'invention selon son deuxième aspect peut en outre présenter au moins l'une quelconque des caractéristiques suivantes :
Les étapes i à vii sont de préférence recommencées à partir d'un échantillon suivant l'échantillon à partir duquel la précédente sélection a été réalisée ; et/ou
Chaque groupe de blocs quaternaires comprend de préférence le même nombre de blocs quaternaires ; et/ou
Le recommencement des étapes i à vii est de préférence réalisé à partir de chaque autre échantillon parmi les échantillons de la série d'échantillons enregistrés ; et/ou
Le recommencement de l'étape c) est de préférence réalisé pour chacune des autres valeurs de l'ensemble comprenant une valeur nominale correspondant à une fréquence de sur-échantillonnage nominale du récepteur, au moins une valeur inférieure à ladite valeur nominale et au moins une valeur supérieure à ladite valeur nominale.

Selon une variante du deuxième aspect de l'invention, la boucle itérative sur l'échantillon donné à partir duquel la séquence d'échantillons est sélectionnée et la boucle itérative sur le nombre d'échantillons présumés par bit sont parcourues d'une façon différente de celles énoncées ci-dessus.

Plus particulièrement, selon cette variante, le procédé de l'invention peut s'énoncer comme suit :
Procédé de traitement d'un signal radiofréquence reçu par un récepteur, le signal radiofréquence ayant été défini à partir d'une trame de données comprenant une succession d'un nombre déterminé de blocs de données dits secondaires, chaque bloc de données secondaire ayant été obtenu par permutation, selon un algorithme et des paramètres déterminés, de données numériques préalablement regroupées dans un bloc dit originel ayant une taille en bits déterminée, le procédé de traitement comprenant les étapes suivantes :
a) Échantillonner le signal radiofréquence avec une fréquence de sur-échantillonnage définie par le récepteur,
b) Enregistrer au fur et à mesure les échantillons dans une mémoire tampon,
c) Parmi une série d'échantillons enregistrés ayant une taille au moins égale à la taille en bits de chaque bloc secondaire que multiplie le nombre de blocs secondaires dans la trame de données et un nombre présumé d'échantillons par bit choisi parmi un ensemble comprenant une valeur nominale correspondant à une fréquence de sur-échantillonnage nominale du récepteur, au moins une valeur inférieure à ladite valeur nominale et au moins une valeur supérieure à ladite valeur nominale :
   i. Sélectionner une séquence d'échantillons à partir d'un échantillon donné et à intervalle régulier de taille égale audit nombre présumé d'échantillons par bit,
   ii. Séparer la séquence d'échantillons sélectionnée en un nombre de blocs d'échantillons dits tertiaires égal au nombre de blocs secondaires dans la trame de données,
   iii. Pour chaque bloc tertiaire, générer un bloc d'échantillons dit quaternaire par permutation des échantillons du bloc tertiaire entre eux, cette permutation étant l'inverse de celle effectuée sur le bloc originel pour obtenir le bloc secondaire correspondant, puis
   iv. Répartir les blocs quaternaires en au moins deux groupes,
   v. Par groupe, calculer un bloc dit moyen à partir des blocs quaternaires,
   vi. Calculer une mesure de corrélation entre chaque paire de blocs moyens précédemment calculés,
   vii. Sauvegarder la ou les mesures de corrélation précédemment calculées, en associant chaque mesure de corrélation à un indice de l'échantillon à partir duquel la sélection a été réalisée et au nombre présumé d'échantillons par bit, puis
   viii. Recommencer les étapes i à vii, pour au moins une autre valeur du nombre présumé d'échantillons par bit que celle avec laquelle la précédente sélection a été réalisée,
d) Recommencer l'étape c à partir d'au moins un autre échantillon que l'échantillon précédemment considéré, de sorte à sauvegarder les mesures de corrélation calculées, en associant chaque mesure de corrélation à l'indice de l'échantillon à partir duquel l'étape c est recommencée et au nombre présumé d'échantillons par bit considéré,
e) Déterminer, parmi les mesures de corrélation sauvegardées, la mesure de corrélation correspondant à une plus grande corrélation entre blocs moyens, et récupérer l'indice de l'échantillon et le nombre présumé d'échantillons par bit associés à cette mesure de corrélation, puis
f) Identifier la séquence d'échantillons sélectionnée à partir de l'indice de l'échantillon associé à cette mesure de corrélation et à intervalle régulier de taille égale au nombre présumé d'échantillons par bit associé à cette mesure de corrélation, comme étant représentative d'une succession de blocs de données originels correspondant à la succession de blocs de données secondaires à partir de laquelle la trame de données a été construite.

De manière facultative, l'invention selon la variante de son deuxième aspect peut en outre présenter au moins l'une quelconque des caractéristiques suivantes :
Les étapes i à vii sont de préférence recommencées pour chacune des autres valeurs de l'ensemble comprenant une valeur nominale correspondant à une fréquence de sur-échantillonnage nominale du récepteur, au moins une valeur inférieure à ladite valeur nominale et au moins une valeur supérieure à ladite valeur nominale ; et/ou
Chaque groupe de blocs quaternaires comprend de préférence le même nombre de blocs quaternaires ; et/ou
L'étape c) est de préférence recommencée à partir d'un échantillon suivant l'échantillon à partir duquel la précédente sélection a été réalisée ; et/ou
Le recommencement de l'étape c) est de préférence réalisé à partir de chaque autre échantillon parmi les échantillons de la série d'échantillons enregistrés.

L'homme du métier reconnaîtra que, en plus de cette variante, les boucles susmentionnées peuvent être parcourues de diverses autres façons.

De manière facultative, l'invention selon son deuxième aspect et sa variante peut en outre présenter au moins l'une quelconque des caractéristiques suivantes :
De préférence, l'échantillon donné à partir duquel la séquence d'échantillons est sélectionnée est initialement le premier échantillon enregistré dans la mémoire tampon ; et/ou
Lorsque les blocs quaternaires sont répartis en plus de deux groupes, l'étape consistant à calculer au moins une mesure de corrélation entre chaque paire de blocs moyens précédemment calculés comprend en outre le calcul d'une mesure de corrélation par moyennage des mesures de corrélation entre paires de blocs moyens ; et/ou
L'étape f peut être suivie d'une étape de détermination des données numériques par moyennage synchronisé sur la séquence d'échantillons identifiée à l'étape f. Les données numériques ainsi déterminées sont présumées correspondre à celles ayant été regroupées dans le bloc originel.

D'autres aspects de la présente invention concernent chacun un produit programme d'ordinateur comprenant des instructions, qui lorsqu'elles sont effectuées par au moins un processeur, exécute au moins les étapes de chacun des procédés de traitement introduits ci-dessus.

Selon un autre de ses aspects, l'invention concerne également un système de communication comprenant au moins un émetteur configuré pour mettre en oeuvre le procédé de traitement selon le premier aspect de l'invention et au moins un récepteur configuré pour mettre en oeuvre le procédé de traitement selon le deuxième aspect de l'invention ou selon sa variante.

### BRÈVE DESCRIPTION DES FIGURES

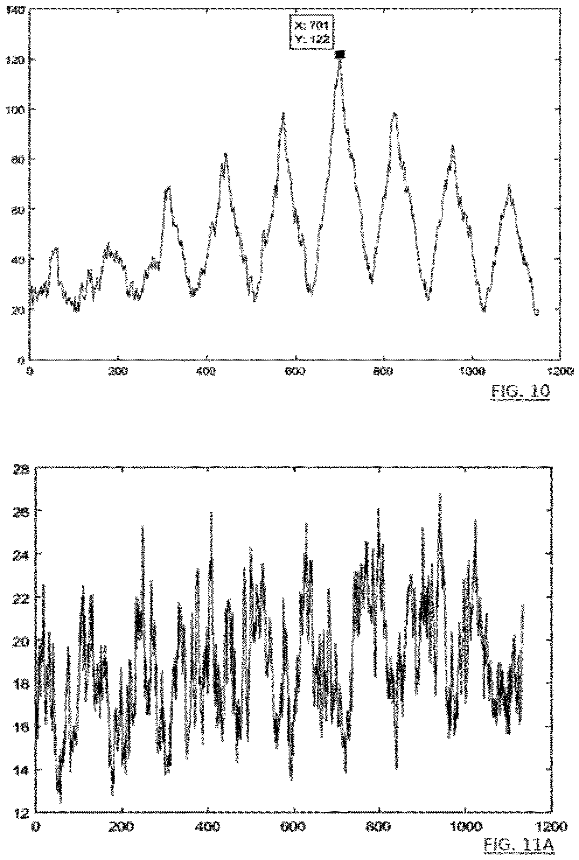

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement un exemple de réalisation du procédé de traitement selon le premier aspect de l'invention ;
La figure 2 représente schématiquement un exemple de réalisation de l'étape consistant à générer une pluralité de blocs de données secondaires par permutation des données numériques du bloc originel ;
La figure 3 représente, selon un schéma différent de celui illustré sur la figure 1, l'exemple de réalisation illustré sur la figure 1 ;
La figure 4 représente schématiquement une partie du récepteur mis en oeuvre selon le deuxième aspect de l'invention ou selon la variante du deuxième aspect et un exemple de réalisation d'une première partie du procédé de traitement selon le deuxième aspect de l'invention ou sa variante ;
La figure 5 représente schématiquement un exemple de réalisation d'une partie du procédé de traitement selon le deuxième aspect de l'invention et selon sa variante ;
La figure 6 représente schématiquement un exemple de réalisation d'une partie du procédé de traitement selon le deuxième aspect de l'invention et selon sa variante ;
La figure 7 représente schématiquement un mode de réalisation de l'étape consistant à calculer un bloc moyen à partir de blocs quaternaires réunis dans un même groupe ;
La figure 8 représente schématiquement un mode de réalisation d'étapes du procédé de traitement selon le deuxième aspect de l'invention et selon sa variante, ces étapes résultants en un calcul d'une mesure de corrélation entre deux blocs moyens issus de deux groupes de blocs quaternaires ;
La figure 9 représente schématiquement un exemple de réalisation d'une étape de calcul d'une mesure de corrélation du procédé de traitement selon le deuxième aspect de l'invention et selon sa variante, lorsque les blocs quaternaires sont répartis en quatre groupes distincts ;
La figure 10 est un graphique représentant l'évolution de mesures de corrélation effectuées en fonction de l'indice de l'échantillon à partir duquel la sélection de la séquence d'échantillons a été réalisée selon un exemple de réalisation du procédé de traitement selon le deuxième aspect de l'invention et selon sa variante ;
Les quatre figures 11A à 11D sont des graphiques représentant l'évolution de mesures de corrélation effectuées pour quatre différentes valeurs du nombre d'échantillons présumés par bit selon un exemple de réalisation du procédé de traitement selon le deuxième aspect de l'invention et selon sa variante ;

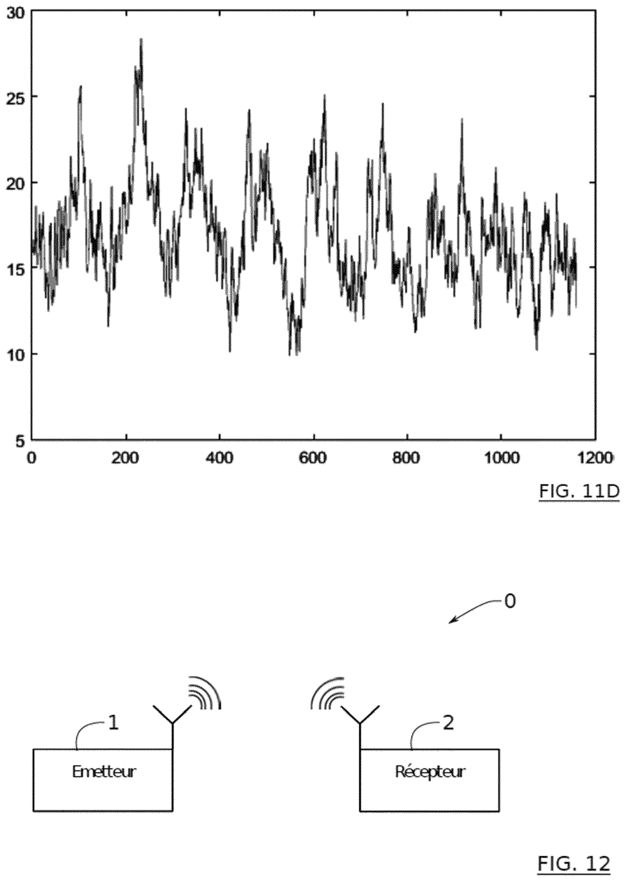

La figure 12 représente schématiquement un mode de réalisation du système de communication selon un aspect de l'invention ;

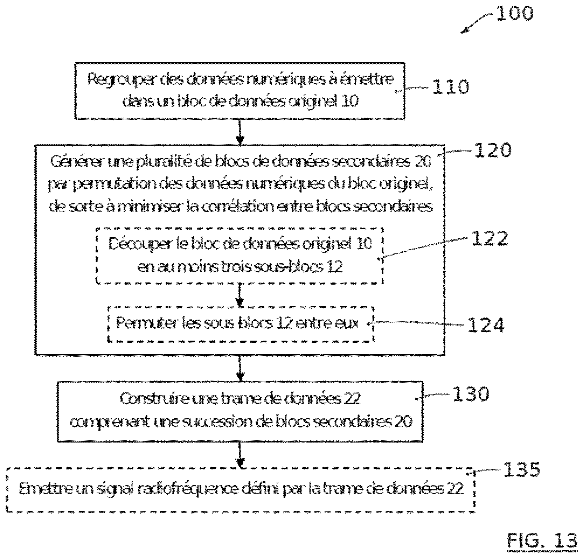

La figure 13 est un ordinogramme représentant un exemple de réalisation du procédé de traitement selon le premier aspect de l'invention ;

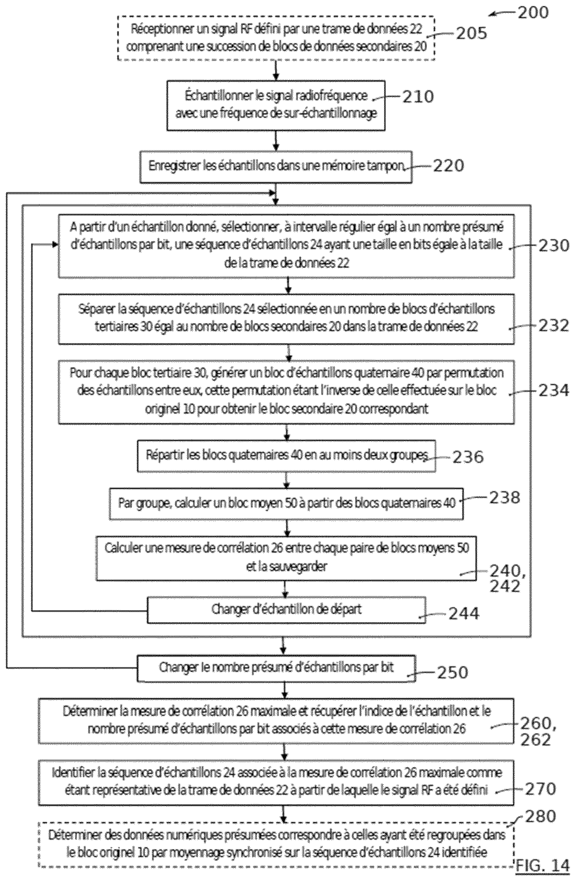

La figure 14 est un ordinogramme représentant un exemple de réalisation du procédé de traitement selon le deuxième aspect de l'invention ;

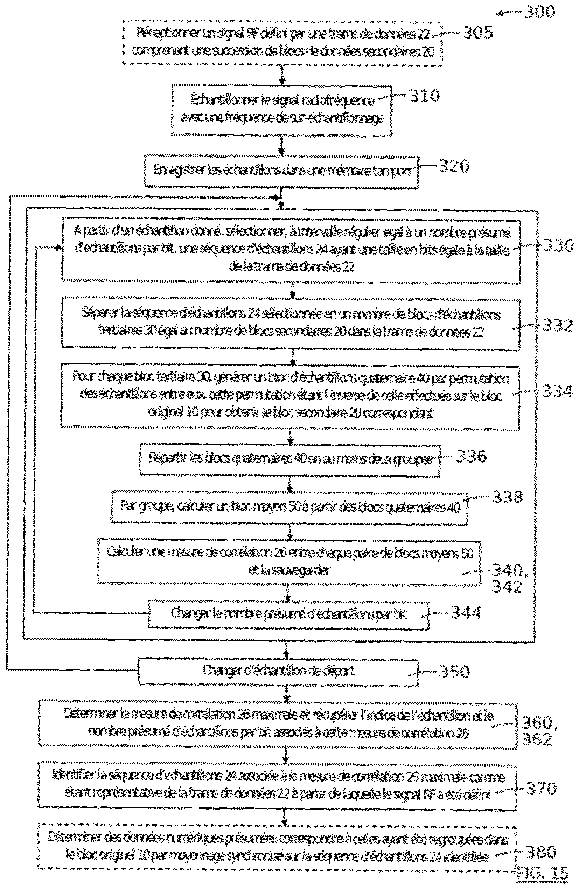

La figure 15 est un ordinogramme représentant un exemple de réalisation du procédé de traitement selon une variante du deuxième aspect de l'invention ;

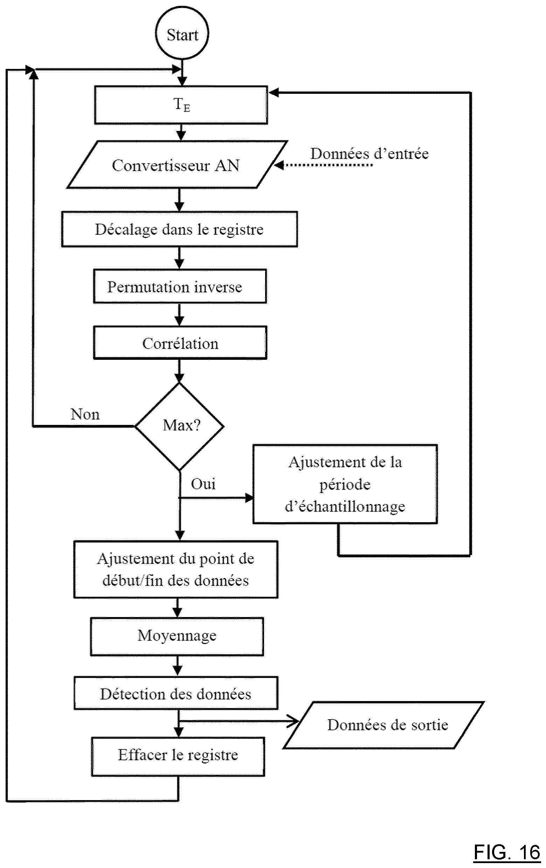

La figure 16 est un ordinogramme représentant, d'une autre façon que la figure 14, un autre exemple de réalisation du procédé de traitement selon le deuxième aspect de l'invention ; et

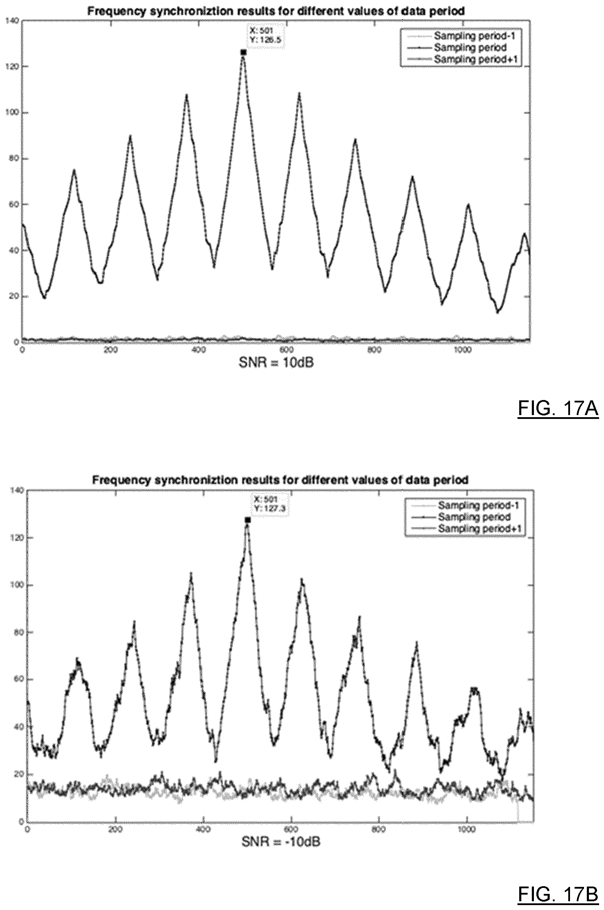

Les figures 17A et 17B sont des graphes représentant chacun l'évolution de mesures de corrélation effectuées pour trois valeurs du nombre d'échantillons présumés par bit, ces valeurs étant les mêmes pour les deux graphes, le graphe de la figure 17A ayant été obtenu pour un rapport signal sur bruit de 10dB et le graphe de la figure 17B ayant été obtenu pour un rapport signal sur bruit de -10dB.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

On entend, par « sur-échantillonnage », le processus d'échantillonnage d'un signal radiofréquence à une fréquence d'échantillonnage nettement supérieure au taux de Nyquist. Théoriquement, un signal limité en largeur de bande peut être parfaitement reconstruit s'il est échantillonné à la vitesse de Nyquist ou au-dessus. Le taux de Nyquist est défini comme étant le double de la composante de fréquence la plus élevée du signal à reconstruire.

En référence à la figure 12, la présente invention concerne un procédé de synchronisation d'un système de communication 0 basé sur la retransmission de données. La communication est réalisée par émission radiofréquence entre un émetteur 1 et un récepteur 2. Le procédé de synchronisation se décompose en deux procédés de traitement de données numériques, le premier 100 étant mis en oeuvre au niveau de l'émetteur 1 et le second 200 étant mis en oeuvre au niveau du récepteur 2.

Dans un premier temps, nous décrivons ci-dessous un mode de réalisation du procédé de traitement 100 selon le premier aspect de l'invention mis en oeuvre au niveau de l'émetteur 1, puis nous décrirons un mode de réalisation du procédé de traitement 200 selon le deuxième aspect de l'invention mis en oeuvre au niveau du récepteur 2. Nous verrons que ces deux procédés de traitement 100 et 200 sont évidemment liés entre eux par un seul et même concept inventif.

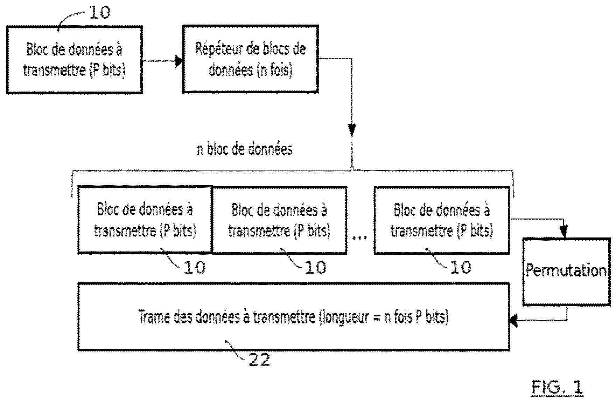

En référence aux figures 1, 2, 3 et 13, le procédé de traitement 100 selon le premier aspect de l'invention consiste à traiter des données numériques destinées à être transmises 135 par signal radiofréquence depuis l'émetteur 1 vers le récepteur 2.

De façon connue, les données numériques à transmettre 135 sont ainsi d'abord converties en un signal analogique par le biais d'un convertisseur numérique-analogique de l'émetteur 1.

Selon un mode de réalisation du procédé de traitement 100, les données numériques sont traitées avant d'être émises 135 de la façon exposée ci-dessous.

Les données numériques à transmettre 135 sont tout d'abord regroupées 110 dans un bloc de données dit originel 10 présentant une taille en bits déterminée. La taille en bits du bloc de données originel 10 est, en relation avec les applications visées du procédé de synchronisation selon l'invention, relativement limitée. Typiquement, le bloc de données originel 10 comprend entre 64 et 1024 bits, de préférence entre 64 et 128 bits.

À partir du bloc de données originel 10, le procédé 100 consiste à générer 120 une pluralité de blocs de données dits secondaires 20, de façon à construire 130 une trame de données 22 composée de la pluralité de blocs de données secondaires 20.

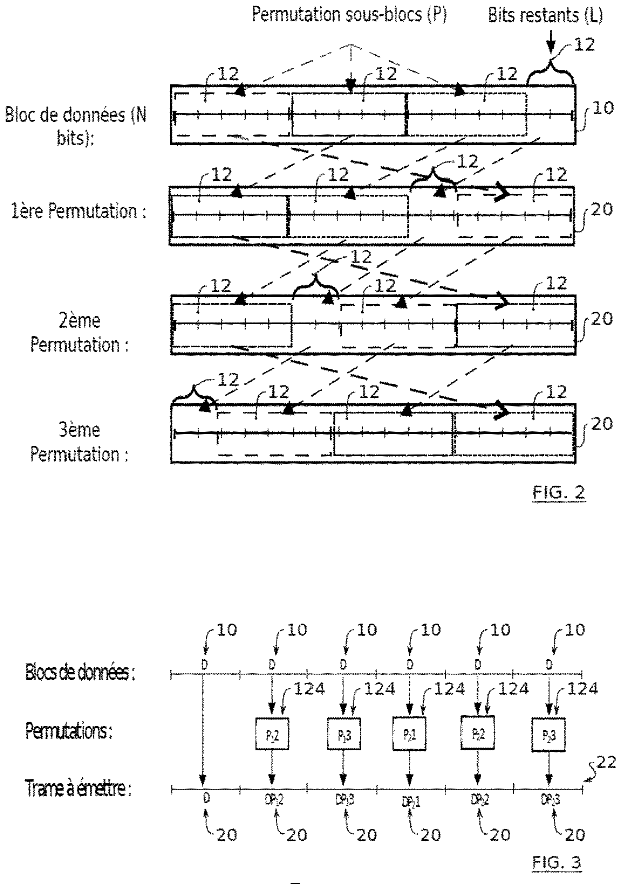

Chaque bloc de données secondaire 20 est plus particulièrement obtenu par permutation des données numériques que comprend le bloc de données originel 10. Pour ce faire, l'émetteur 1 peut comprendre des moyens de traitement, tel qu'un microprocesseur, configuré pour implémenter un algorithme prédéterminé faisant potentiellement intervenir un certain nombre de paramètres. Cet algorithme dit de permutation est plus particulièrement conçu pour minimiser la corrélation entre les blocs secondaires 20 générés 120. Un exemple de mise en oeuvre d'un tel algorithme est décrit plus bas en référence à la figure 2. Toutefois, le procédé de synchronisation selon l'invention n'est pas limité à un algorithme de permutation particulier. L'homme du métier pourra choisir parmi les algorithmes connus permettant de permuter des données numériques regroupées 110 dans un bloc de données celui permettant d'obtenir une décorrélation satisfaisante, voire optimale, entre les blocs de données secondaires 20 générés 120. Pour obtenir une décorrélation optimale des blocs de données secondaires 20 entre eux, l'algorithme et ses paramètres seront de préférence choisis de sorte que chaque bloc secondaire 20 généré 120 soit différent des autres blocs secondaires 20 de la pluralité.

Comme cela apparaîtra à la description du procédé de traitement 200 mise en oeuvre au niveau du récepteur 2, la trame de données 22 construite 130 peut avantageusement n'être constituée que des blocs secondaires 20 générés 120. Autrement dit, la trame de données 22 peut avantageusement être exempte d'autres données numériques que celles issues des permutations des données numériques du bloc originel 10. C'est au moins en cela que le procédé de traitement 100 selon le premier aspect de l'invention se distingue des procédés de synchronisation connus de l'art antérieur, ces derniers étant désavantageusement basés sur l'ajout aux données à transmettre de données de synchronisation. De telles données de synchronisation extérieures aux données numériques que l'on souhaite transmettre viennent donc augmenter la quantité de données à transmettre, ce qui est effectivement dommageable dans le cadre de communications dans des bandes passantes étroites.

En référence à la figure 2, un exemple de réalisation de l'étape de génération 120 de la pluralité de blocs secondaires 20 est décrit ci-après. Le bloc de données originel 10 à transmettre est tout d'abord découpé 122 en au moins trois sous-blocs 12. Comme illustré en haut de la figure 2, un bloc de données originel de vingt bits peut être découpé 122 en quatre sous-blocs 12 : trois sous-blocs 12 comprenant chacun six bits, et un quatrième sous-bloc 12 comprenant les deux bits restants sur les vingt bits que compte le bloc de données originel 10. Différents découpages en sous-blocs 12 du bloc de données originel 10 sont successivement envisageables qui permettront la génération 120 d'une pluralité accrue de blocs de données secondaires 20. Notons toutefois que dans le présent exemple de réalisation, il est préféré qu'au moins un sous-bloc comprenne au moins deux bits. En effet, si chaque sous-bloc pouvait ne comprendre qu'un unique bit, l'étape de découpage 122 serait superflue. Comme l'illustre l'exemple donné, notons qu'au moins deux sous-blocs 12 peuvent comprendre un nombre différent de bits.

L'algorithme de permutation illustré sur la figure 2 est particulièrement intéressant en ce qu'il se réduit, une fois le découpage 122 réalisé, à réécrire dans le registre les sous-blocs de façon à ce que ceux-ci soient décalés entre eux. Plus particulièrement, dans l'exemple illustré, le premier sous-bloc du bloc de données originel 10 est réécrit à la fin d'un espace du registre présentant une taille égale à la taille du bloc de données originel 10. Les autres sous-blocs sont écrits dans ledit espace en amont de la position du premier sous-bloc décalé et dans l'ordre de leur écriture dans le bloc de données originel 10. De la sorte, un premier bloc secondaire 20 est obtenu. Un deuxième bloc secondaire 20 peut être obtenu de la façon illustrée sur la figure 2 en permutant entre eux les sous-blocs 12 du premier bloc secondaire 20 obtenu, puis un troisième bloc secondaire 20 peut être obtenu en permutant entre eux les sous-blocs 12 du deuxième bloc secondaire 20 obtenu. L'avantage de cet algorithme est de considérer la permutation des suites de bits que comprend chaque sous-bloc 12, plutôt que la permutation des bits pris individuellement entre eux, concourant par-là à la minimisation de la corrélation entre les blocs secondaires 20 générés 120.

Le nombre de blocs secondaires 20 à générer 120 dépend du nombre de fois qu'il sera nécessaire et suffisant de répéter les données numériques pour pouvoir les transmettre effectivement au récepteur 2, ce nombre de répétitions dépendant à son tour, et pour l'essentiel, des conditions de transmission radiofréquence entre l'émetteur 1 et le récepteur 2. Il sera donc à adapter au cas par cas, sachant que le procédé synchronisation selon la présente invention permet de repousser la limite en termes de nombre de répétitions des procédés de synchronisation de l'art antérieur. Typiquement, dans des conditions ordinaires de communication, le procédé synchronisation selon l'invention reste efficient pour un nombre de répétitions compris entre 2 et 32, de préférence supérieur à 6, voire compris entre 6 et 16, lorsque les procédés de synchronisation de l'art antérieur ont tendance à diverger dès lors que le nombre de répétitions est supérieur ou égal à 5. Notons que le nombre de répétitions peut ne pas être imposé, ni même connu, a priori. Il est en effet possible d'émettre de façon répétée les données numériques du bloc originel 10 un certain nombre de fois et de ne considérer au niveau du récepteur 2 qu'un nombre limité de ces répétitions. Il est bien entendu préférable, en particulier dans le contexte de communications dans des bandes passantes étroites, d'adapter au plus juste le nombre de répétitions des données à chaque cas d'espèce. Cette adaptation est présumée relever des compétences ordinaires de l'homme du métier, par exemple en réalisant des essais de routine.

Il est possible d'imager le procédé de traitement 100 de la façon illustrée sur les figures 1 et 3. Une fois défini le bloc de données originel 10 à transmettre, le bloc de données est répété n fois et les n blocs de données originels 10 obtenus sont concaténés entre eux, puis chaque bloc de données originel 10 subit une permutation du type décrit ci-dessus, de sorte à obtenir la trame de données 22. Cette dernière 22 est ainsi composée d'une succession d'un nombre déterminé de blocs secondaires 20 adjacents deux à deux, ce nombre étant égal au nombre de répétitions du bloc de données originel 10. La façon dont sont notées les permutations 124 sur la figure 3 traduit le fait, déjà énoncé ci-dessus, que différents découpages 122 en sous-blocs 12 du bloc de données originel 10 sont successivement envisageables qui permettront la génération 120 d'une pluralité accrue de blocs de données secondaires 20. Il est à noter ici que, au vu du nombre limité de répétitions nécessaire et suffisant pour transmettre les données numériques, générer 120 la pluralité de blocs de données secondaires 20 de sorte que chaque bloc secondaire généré soit différent des autres blocs secondaires de la pluralité n'est pas une gageure.

On notera que, comme illustré sur la figure 3, le bloc de données originel 10 peut avantageusement faire partie de la trame de données 22 à émettre. Autrement dit, il n'est pas nécessaire que chaque bloc secondaire 20 composant la trame de données 22 soit différent du bloc de données originel 10, y compris pour que chaque bloc secondaire 20 soit différent des autres blocs secondaires 20.

Il apparaît donc de ce qui précède que la trame de données 22 est déterminée par l'exemple de réalisation du procédé de traitement 100 selon le premier aspect de l'invention. Dès lors, c'est de façon connue que cette trame de données 22 peut être convertie en un signal analogique, et plus particulièrement en un signal radiofréquence à émettre 135 depuis l'émetteur 1 jusqu'au récepteur 2 du système de communication 0.

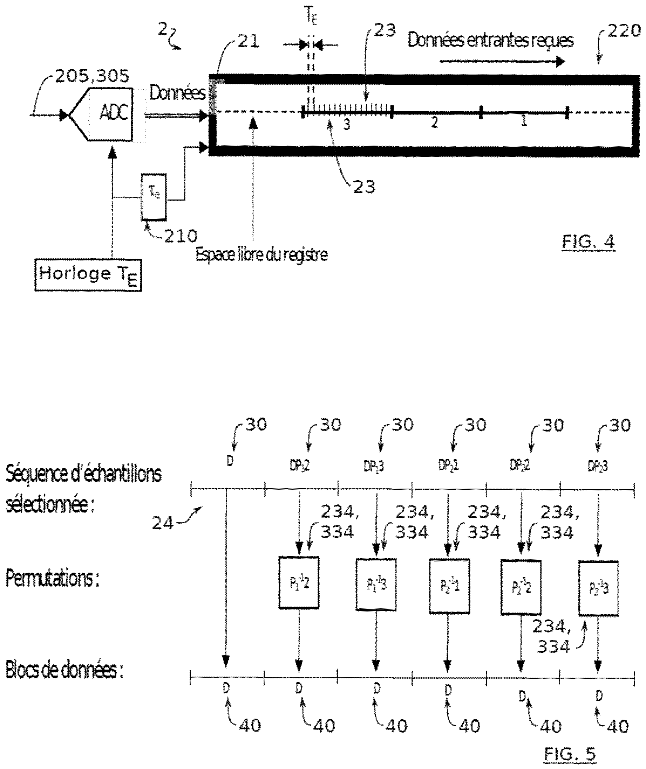

En référence aux figures 4 à 12, 14 et 16, le procédé de traitement 200 selon le deuxième aspect de l'invention, mis en oeuvre au niveau du récepteur 2, va maintenant être décrit.

En toute hypothèse, le signal radiofréquence émis 135 est reçu 205 par le récepteur 2. Le récepteur 2 comprend, comme illustré sur la figure 4, un convertisseur analogique-numérique configuré pour convertir le signal radiofréquence reçu 205 en données numériques, de préférence binaires. Cette étape est également représentée sur la figure 16. Plus particulièrement, le convertisseur analogique-numérique fonctionne avec un retard nécessaire à la conversion, ce retard étant communément appelé temps de conversion, et étant noté τₑ sur la figure 4.

Par ailleurs, le convertisseur analogique-numérique fonctionne avec une fréquence d'horloge définie par ses composants électroniques. Cette fréquence d'horloge est proportionnelle, voire égale, à la fréquence, dite d'échantillonnage, à laquelle le signal radiofréquence est converti en données numériques. A cette fréquence d'échantillonnage correspond une période de temps noté T_{E} sur la figure 4 et la figure 16. La fréquence d'échantillonnage est plus particulièrement ici une fréquence de sur-échantillonnage, traduisant ainsi le sur-échantillonnage appliqué par le convertisseur analogique-numérique à chaque bit de données transmis. Plus particulièrement, à l'issue de la conversion, chaque bit de données transmis sera représenté par un certain nombre de bits enregistrés dans une mémoire tampon 21, aussi appelée registre, du récepteur 2, ce nombre de bits étant proportionnel à la fréquence de sur-échantillonnage à laquelle fonctionne le convertisseur analogique-numérique. En d'autres termes, chaque bit transmis se traduit dans le registre par une pluralité d'échantillons 23 prenants chacun la forme d'un bit.

Ainsi, en référence aux figures 4 et 16, le procédé de traitement 200 selon le deuxième aspect de l'invention comprend tout d'abord l'étape consistant à échantillonner 210 le signal radiofréquence reçu 205 à la fréquence de sur-échantillonnage définie par le récepteur 2, puis l'étape consistant à enregistrer 220, de préférence au fur et à mesure que le signal radiofréquence est reçu 205 et converti, les échantillons 23 issus de cette conversion dans le registre 21 du récepteur 2. L'étape d'enregistrement 220 peut être réalisée y compris en considérant le cas échéant un décalage d'écriture des données correspondantes dans le registre.

Ce sont le temps de conversion, non nul, et la potentielle différence de fréquences d'horloge entre l'émetteur 1 et le récepteur 2 qui expliquent, au moins en partie, et en tout cas imposent qu'il soit nécessaire de procéder à une synchronisation en fréquence et en phase afin de pouvoir retrouver, par moyennage synchronisé au niveau du récepteur 2, les données numériques converties et émises 135 par l'émetteur 1.

Pour ce faire, il est prérequis que le récepteur 2 connaisse la façon dont la permutation des données numériques du bloc originel 10 a été réalisée au niveau de l'émetteur 1. Autrement dit, il est prérequis que le récepteur 2 connaisse l'algorithme et les paramètres utilisés pour générer 120 la pluralité de blocs secondaires 20. Il est également prérequis que le récepteur 2 connaisse :
a) le nombre de bits que comprend le bloc de données originel 10,
b) le nombre de répétitions du bloc de données originel 10 que comprend la trame de données 22, et
c) le nombre approximatif des échantillons 23 par bit de données transmis, ce nombre dépendant de la fréquence de sur-échantillonnage du récepteur 2 et plus particulièrement d'une fréquence de sur-échantillonnage dite nominale du récepteur 2.

La façon dont les prérequis susmentionnés sont assurés est connue de l'homme du métier. Elle peut ne pas différer de la façon dont d'éventuels prérequis, identiques ou différents de ceux énoncés ci-dessus, peuvent être à assurer selon les procédés de synchronisation de l'art antérieur.

Connaissant les prérequis susmentionnés, le récepteur 2 est en mesure de mettre en oeuvre les étapes décrites ci-après du procédé de traitement 200 selon le deuxième aspect de l'invention.

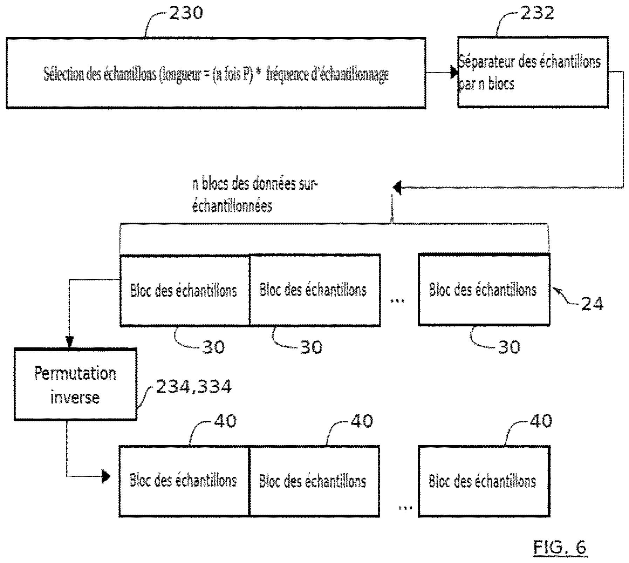

En référence aux figures 5 et 6, le procédé de traitement 200 comprend, de préférence suite à l'enregistrement 220 d'une série d'échantillons ayant une taille au moins égale à la taille en bits de chaque bloc secondaire 20 que multiplie le nombre de blocs secondaires 20 dans la trame de données 22 et un nombre présumé d'échantillons par bit choisi parmi un ensemble comprenant une valeur nominale correspondant à la fréquence de sur-échantillonnage nominale du récepteur, au moins une valeur inférieure à la valeur nominale et au moins une valeur supérieure à la valeur nominale, une étape de sélection 230 d'une séquence d'échantillons 24. Plus particulièrement, la sélection 230 est, dans un premier temps, effectuée :
a) pour ledit nombre présumé d'échantillons par bit, et
b) à partir d'un échantillon 23 donné et à intervalle régulier de taille égale audit nombre présumé d'échantillons par bit.

L'étape de sélection 230 aboutit ainsi à définir une première séquence d'échantillons 24 ayant la taille en bits de la trame de données 22. Cette première séquence d'échantillons 24 est susceptible de représenter la trame de données 22, et par voie le bloc de données originel 10.

Afin d'évaluer, ou plutôt de quantifier, le niveau de viabilité de représentation que la première séquence d'échantillons 24 présente, le procédé de traitement 200 comprend les étapes suivantes consistant à traiter cette première séquence d'échantillons 24 sélectionnée 230.

Comme illustré sur la figure 6, le traitement de la première séquence d'échantillons 24 comprend tout d'abord une étape consistant à séparer 232 cette séquence en un nombre de blocs d'échantillons, dits tertiaires 30, égal au nombre de blocs secondaires 20 compris dans la trame de données 22.

À ce stade, l'on comprend que chaque bloc tertiaire 30 est susceptible de représenter un bloc secondaire 20 correspondant dans la trame de données 22. Rappelons ici que chaque bloc secondaire 20 a été généré 120, au niveau de l'émetteur 1, par une permutation des bits, et plus particulièrement des sous-blocs de bits, du bloc de données originel 10. Ainsi, afin que chaque bloc tertiaire 30 soit représentatif du bloc de données originel 10, il est nécessaire de lui appliquer une permutation inverse à celle ayant conduit à la génération du bloc secondaire 20 correspondant. Cette étape est réalisée en générant 234 un bloc d'échantillons dits quaternaire 40 par permutation des échantillons du bloc tertiaire 30 entre eux, cette permutation étant l'inverse de celle effectuée sur le bloc originel 10 pour obtenir le bloc secondaire 20 correspondant. Sur la figure 16, cette étape est représentée comme succédant à l'écriture dans les registres des échantillons et comme précédant une étape de mesures de corrélation décrite plus bas. Sur la figure 5, l'exposant « -1 » associé à chacune des notations de type « Pₙ » traduit la notion de permutation inverse qui vient d'être décrite. L'on obtient ainsi, un nombre de blocs quaternaires 40 égal au nombre de blocs tertiaires 30.

Chaque bloc quaternaire 40 est ainsi susceptible de représenter le bloc de données originel 10. Plus particulièrement, chaque échantillon de chaque bloc quaternaire 40 peut être associé à un indice, de sorte qu'un échantillon d'indice donné du bloc quaternaire est susceptible de représenter un bit de même indice du bloc originel 10.

Pour quantifier le niveau de viabilité de cette représentation, le procédé de traitement 200 prévoit tout d'abord de répartir 236 les blocs quaternaires 40 en au moins deux groupes, puis à calculer 238 un bloc dit moyen 50 pour chaque groupe sur la base des blocs quaternaires 40 que comprend ce groupe, pour pouvoir ensuite calculer 240 une mesure de corrélation 26 entre chaque paire de blocs moyens 50.

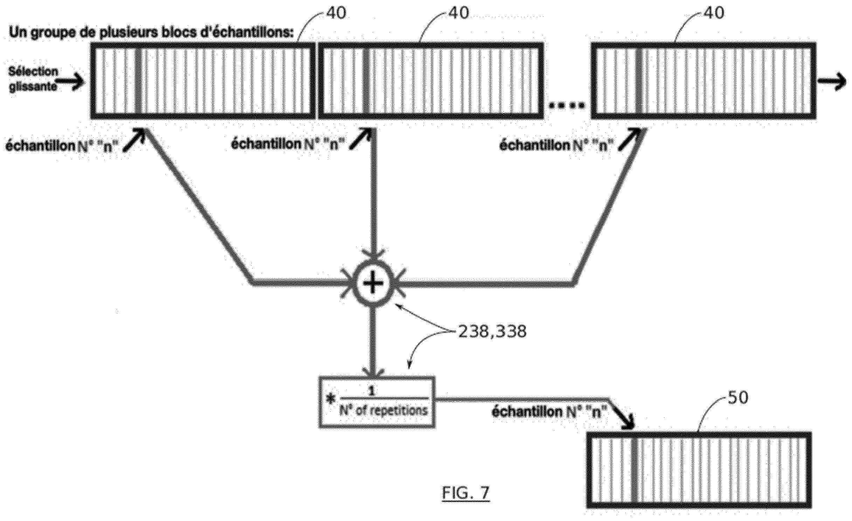

Le calcul 238 de chaque bloc moyen 50 à partir des blocs quaternaires 40 d'un groupe donné peut être effectué, de la façon illustrée sur la figure 7, par une simple moyenne arithmétique des échantillons associés à un même indice parmi les échantillons compris dans les blocs quaternaires 40 du groupe. Notons ici qu'il n'est pas nécessaire que chaque groupe comprenne un même nombre de blocs quaternaires 40.

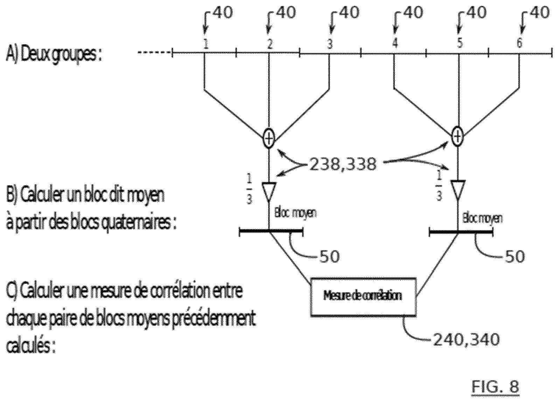

Lorsque les blocs quaternaires 40 sont répartis 236 en deux groupes, le calcul 240 de la mesure de corrélation 26 est effectué entre les deux blocs moyens 50 ayant été calculés 238. Cette situation est celle qu'illustre la figure 8. Chaque calcul 240 de la mesure de corrélation 26 entre deux blocs moyens 50 est plus particulièrement effectué selon un algorithme ad hoc connu de l'art antérieur. Plusieurs de ces algorithmes peuvent être connus, parmi lesquels l'homme du métier est présumé savoir choisir le plus efficace et/ou le plus précis, éventuellement selon un compromis en termes de ressources informatiques et de précision du calcul 240.

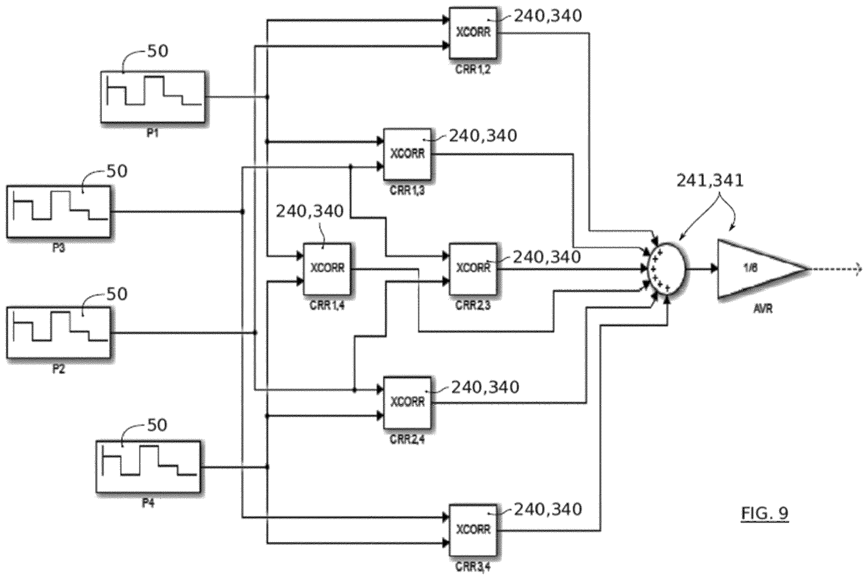

Lorsque les blocs quaternaires 40 sont répartis 236 en plus de deux groupes, le calcul 240 de la mesure de corrélation 26 est plus complexe. Cette situation est illustrée sur la figure 9, où quatre blocs moyens 50 ont été calculés 238 à partir des blocs quaternaires 40 répartis 236 en quatre groupes. La figure 9 illustre plus particulièrement la technique à corrélations multiples qu'il convient d'appliquer alors aux quatre blocs moyens 50. Brièvement, une mesure de corrélation 26 est calculée 240 entre chaque paire de blocs moyens 50, par exemple de la même façon que lorsque les blocs quaternaires 40 sont répartis 236 en deux groupes. Pour quatre blocs moyens 50, six paires de blocs moyens 50 sont à considérer. Ainsi, l'on obtient six mesures de corrélation 26 correspondant chacune à une des six paires de blocs moyens 50 à considérer. Puis, sur la base des six mesures de corrélation 26 obtenues, une moyenne arithmétique est effectuée, qui permet de ramener les six mesures de corrélation 26 à une seule qui sera utilisée par la suite de la même façon que sera utilisée l'unique mesure de corrélation 26 obtenue lorsque les blocs quaternaires 40 sont répartis 236 en deux groupes uniquement. Ainsi, l'on comprend que, si la répartition des blocs quaternaires 40 en plus de deux groupes complexifie le calcul 240 de la mesure de corrélation 26 destinée à être utilisée dans les étapes suivantes du procédé de traitement 200, ces étapes seront implémentées de la même façon quel que soit le nombre de groupes dans lesquels les blocs quaternaires 40 ont été répartis 236.

À ce stade, on a donc obtenu une mesure de corrélation 26 que le procédé de traitement 200 prévoit de sauvegarder 242, par exemple dans un support de mémorisation du récepteur 2, en l'associant d'une part à l'indice de l'échantillon 23 à partir duquel la première séquence d'échantillons 24 a été sélectionnée 230, d'autre part au nombre présumé d'échantillons par bit considéré, afin que cette mesure de corrélation 26 puisse être ultérieurement utilisée.

La quantification du niveau de viabilité de la représentation qu'offre les blocs quaternaires 40 issus de la première séquence d'échantillons 24 n'est pas absolu, mais est en revanche relative. C'est afin de pouvoir comparer cette quantification à d'autres, de sorte à pouvoir ensuite identifier 270 une séquence d'échantillons 24 comme étant la plus représentative d'un succession de blocs de données originels 10 correspondant à la succession de blocs de données secondaires 20 à partir de laquelle la trame de données 22 a été construite 130, que le procédé de traitement 200 prévoit de recommencer 244 les étapes 230 à 242 à partir d'un autre échantillon que l'échantillon à partir duquel la première séquence d'échantillons a été sélectionnée, de préférence jusqu'à ce que chaque échantillon enregistré 220 dans le registre 21 ait été considéré comme échantillon de départ d'une sélection 230. Cette boucle itérative est représentée sur la figure 16 par la flèche partant de la case représentant un choix « Max ? » jusqu'en aval de la case de définition de la fréquence d'échantillonnage considérée (représentée ici par la période T_{E}). À cette même fin, le procédé de traitement 200 prévoit encore de recommencer 250 l'ensemble des étapes 230 à 244 pour au moins une autre valeur du nombre présumé d'échantillons par bit, de préférence jusqu'à ce que chaque valeur du nombre présumé d'échantillons par bit de l'ensemble susmentionné ait été considéré. Cette boucle itérative est représentée sur la figure 16 par la flèche partant de la case représentant définissant la nécessité de considérer un ajustement de la fréquence, ou équivalemment de la période T_{E}, d'échantillonnage jusqu'à la case de définition de la fréquence d'échantillonnage qui sera à considérer par la suite.

Il est à noter ici que l'ordre dans lequel sont considérés les échantillons de départ des différentes sélections 230 à effectuer et l'ordre dans lequel sont considérées les valeurs du nombre présumé d'échantillons par bit importent peu. Il peut être plus simple, au moins d'un point de vue de la programmation, de les parcourir dans un ordre déterminé. Par exemple, il semble plus simple de considérer en premier lieu le premier échantillon enregistré dans le registre, puis le deuxième, etc. Par un autre exemple, les échantillons de départ et les valeurs du nombre présumé d'échantillons par bit à considérer pourraient également être parcourus de façon aléatoire, en excluant de préférence de considérer deux fois un même couple de ces paramètres, une telle considération étant inutile.

Il est à considérer également que l'écriture des échantillons 23 dans le registre 21 peut indifféremment être effectuée dans un sens ou dans un autre. En ce sens également, l'ordre dans lequel l'émetteur 1 a communiqué la trame de données 22 peut devoir être considéré. En effet, indépendamment de l'ordre des blocs de données dans le registre 21 du récepteur 2, il est possible d'implémenter le procédé de traitement 200 à partir d'un échantillon de début de trame de données ou de l'échantillon à la fin attendue de la trame de données, et ce notamment au vu des prérequis énoncés ci-dessus. Sur la figure 16, cela est illustré par la case définissant la potentielle nécessité de distinguer entre début et fin de la trame de données.

Après avoir considéré chaque échantillon enregistré 220 dans le registre 21 comme échantillon de départ d'une sélection 230, un ensemble de mesures de corrélation 26 a été obtenu qu'il est possible de représenter graphiquement en fonction des indices des échantillons à partir duquel les sélections 230 ont été effectuées. C'est une telle représentation graphique qu'illustre la figure 10, ainsi que les figures 11A à 11D et les figures 17A et 17B. Ces représentation graphiques ont été obtenues en considérant : un bloc de données originel 10 de 32 bits, quarante répétitions du bloc de données originel 10 et deux groupes de vingt répétitions pour calculer deux blocs moyens. Les données sont présumées enregistrées dans la mémoire tampon 21 du récepteur 2 à raison d'une fréquence d'échantillonnage nominale de quatre échantillons par bit. Les graphiques des figures 10, 11A à 11D et 17A ont été obtenus pour un rapport signal sur bruit de 10 dB, tandis que le graphique de la figure 17B a été obtenu pour un rapport signal sur bruit de -10 dB.

Bien qu'une telle représentation graphique ne soit pas nécessairement à produire pour mettre en oeuvre le procédé de traitement 200 selon le deuxième aspect de l'invention, cette représentation est fournie ici car elle illustre plusieurs avantages du procédé de traitement 200. Un de ces avantages est de montrer la simplicité et la robustesse avec lesquels le procédé de traitement 200 permet d'identifier l'indice de l'échantillon à partir duquel la séquence d'échantillons 24 la plus représentative a été sélectionnée 230. Dans l'exemple illustré sur la figure 10, cet échantillon, correspondant à la plus grande mesure de corrélation 26 obtenue en parcourant un ensemble de plus de 1100 échantillons de départ de la sélection 230, porte l'indice 701. À ce stade, le procédé de traitement 200 a permis une synchronisation en phase du système de communication 0. Autrement dit, le procédé a permis la détection du début et/ou de la fin de la trame de données 22 dans le registre 21 du récepteur 2.

Il reste à obtenir la synchronisation en fréquence du système de communication 0.

C'est cette synchronisation en fréquence que la considération de chaque valeur parmi l'ensemble des valeurs envisageables du nombre présumé d'échantillons par bit permet d'obtenir.

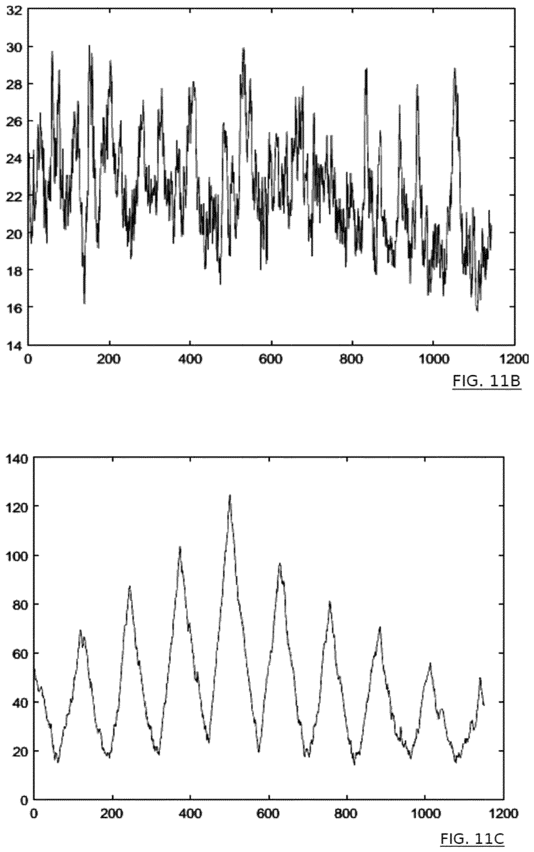

Les figures 11A à 11D illustrent par des graphiques la façon dont le procédé de traitement 200 permet d'obtenir la synchronisation en fréquence du système de communication 0. Plus particulièrement, sur chacun de ces graphiques, est reporté l'ensemble des mesures de corrélation 26 calculées 240 en fonction des indices des échantillons à partir duquel les sélections 230 ont été effectuées, pour une valeur du nombre présumé d'échantillons par bit parmi un ensemble de quatre valeurs, le graphique de la figure 11A ayant été obtenu pour un nombre présumé d'échantillons par bit égal à 126, le graphique de la figure 11B ayant été obtenu pour un nombre présumé d'échantillons par bit égal à 127, le graphique de la figure 11C ayant été obtenu pour un nombre présumé d'échantillons par bit égal à 128, et le graphique de la figure 11D ayant été obtenu pour un nombre présumé d'échantillons par bit égal à 129. De telles représentations graphiques ne sont pas nécessaires à la mise en oeuvre du procédé de traitement 200 selon le deuxième aspect de l'invention, mais sont fournis pour illustrer là encore la simplicité et la robustesse avec lesquelles le procédé de traitement 200 permet de synchroniser en fréquence le système de communication 0.

En comparant entre eux les graphiques qu'illustrent les figures 11A à 11D, et en particulier en comparant entre elles les valeurs maximales en ordonnée qu'atteignent les mesures de corrélation 26 reportées sur ces graphiques, il apparaît immédiatement que ces valeurs maximales sont inférieures à 32 sur les graphiques des figures 11A, 11B et 11D, tandis que la valeur maximale atteinte sur le graphique de la figure 11C est supérieure à 120. Dès lors, l'on comprend que la valeur du nombre d'échantillons par bit à considérer comme offrant la meilleure synchronisation en fréquence du système de communication 0 est égale à 128, selon l'exemple illustré.

Les façons décrites ci-dessus selon lesquelles le procédé de traitement 200 selon le deuxième aspect de l'invention permet d'obtenir une synchronisation en phase et en fréquence du système de communication 0 peuvent être résumées comme consistant à déterminer 260, parmi les mesures de corrélation 26 sauvegardées 242, la mesure de corrélation 26 correspondant à une plus grande corrélation entre blocs moyens 50, et à récupérer 262 l'indice de l'échantillon et le nombre présumé d'échantillons par bit associé à cette mesure de corrélation 26 maximale. Dès lors, il est possible d'identifier 270 la sélection d'échantillons 24 sélectionnée à partir de l'indice associé à la mesure de corrélation 26 maximale et à intervalle régulier de taille égale au nombre présumé d'échantillons par bit associé à cette valeur de corrélation 26 maximale comme étant représentative d'une succession de blocs de données originels correspondant à la succession de blocs de données secondaires à partir de laquelle la trame de données 22 a été construite 130.

À ce stade, il est donc possible de déterminer 280 les données numériques présumées correspondre à celles ayant été initialement regroupées 110 dans le bloc originel 10 en effectuant un moyennage synchronisé sur la séquence d'échantillons 24 identifiée 270. Pour effectuer ce moyennage synchronisé, il est possible de sélectionner 230 à nouveau, dans le registre, la séquence d'échantillons identifiée 270, mais, de façon équivalente, il est également possible d'avoir sauvegardé, pour les utiliser à cette fin, les résultats d'un certain nombre des étapes du procédé de traitement 200 selon le deuxième aspect de l'invention, et en particulier les blocs moyens 50 calculés 240.

La technique de communication combinant la mise en oeuvre du procédé de traitement 100 de données numériques selon le premier aspect de l'invention et du procédé de traitement 200 d'un signal radiofréquence selon le deuxième aspect de l'invention prévoit l'injection au niveau de l'émetteur 1 et l'utilisation au niveau du récepteur 2 d'informations supplémentaires aux données à communiquer pour la synchronisation entre l'émetteur 1 et le récepteur 2 du système de communication 0. La technique de communication proposée est basée, non seulement sur la retransmission de mêmes données par l'émetteur 1, mais également sur la permutation des blocs de données originels 10 avant leur communication. C'est la permutation des données qui constitue l'essentiel, sinon la totalité, desdites informations supplémentaires.

Ce dernier point au moins distingue la méthode de synchronisation utilisée ici des méthodes de synchronisation de l'art antérieur, ces dernières reposant essentiellement sur l'utilisation de signaux extérieurs au signal de données, ces signaux extérieurs comprenant par exemple un mot de préambule.

La permutation des blocs de données originels 10 avant leur communication permet ici de s'assurer que, au niveau du récepteur 2, les mesures de corrélations 26 effectuées permettent une synchronisation précise en phase et en fréquence. La synchronisation en phase est réalisée par l'identification du début et/ou de la fin de la trame (dans la mémoire tampon) portant, de façon répétée et puis permutée, l'information à communiquer. La synchronisation en fréquence est réalisée par la détection du nombre effectif d'échantillons par bit. Ce nombre dépend de la fréquence de sur-échantillonnage au niveau du récepteur 2 et la durée de bit (ou bit-time selon la terminologie anglo-saxonne) est définie par un oscillateur local au niveau de l'émetteur 1. Cette synchronisation précise permet in fine de retrouver, par moyennage synchronisé, les données à communiquer, même lorsque celles-ci sont significativement bruitées.

La technique de communication proposée ici utilise donc le fait que le signal de données est répété périodiquement, et ce sans nécessiter d'exploiter des données de synchronisation extérieures aux signaux de données à communiquer. Elle permet de maintenir la synchronisation en phase et en fréquence même pour la réception de signaux très bruités, et y compris de signaux présentant un rapport signal à bruit de valeur inférieure à 1, voire négative (en décibel (dB)).

Les figures 17A et 17B illustre que la technique de communication proposée ici est effectivement très robuste relativement aux variations du rapport signal à bruit. Plus particulièrement, alors que le graphique de la figure 17B a été obtenu pour un bruit bien supérieur à celui pour lequel le graphique de la figure 17A a été obtenu, on voit que la technique de communication proposée ici permet d'identifier le même échantillon (ici l'échantillon 501) et la même période d'échantillonnage (ici « sampling period » égale 4, relativement à « sampling period - 1 » égale à 3 et « sampling period + 1 » égale à 5).

Il n'y a donc qu'un seul taux d'échantillonnage pour lequel la mesure de corrélation détecte la similarité entre les blocs de données répétés. Dans les graphiques présentés sur les figures 17A et 17B, la variation du rapport signal sur bruit (SNR) est de 20 dB. Cependant, dans les deux cas, la technique de communication proposée ici permet une synchronisation en phase et en fréquence avec une grande précision. Nous pouvons en conclure que la méthode présentée est extrêmement robuste relativement aux variations du bruit.

Elle permet d'améliorer de façon significative le gain de traitement de la méthode de moyennage synchronisé utilisée in fine. En effet, à puissance d'émission constante, l'énergie du signal de données augmente proportionnellement au nombre de répétitions dont la limite opérationnellement admissible est ici repoussée par rapport aux techniques antérieures. Cette technique de communication permet de fait, à conditions de transmission égales, d'appliquer de façon opérationnelle le moyennage synchronisé à un plus grand nombre de répétitions que dans les techniques antérieures. La détection et le traitement des signaux périodiques très bruités ou de très faibles amplitudes avec la méthode de moyennage synchronisé est avantageusement rendue possible. En outre, à nombre de répétitions constant, une économie de bande passante est réalisée par rapport aux techniques antérieures.

L'homme du métier appréciera que la technique de communication proposée ici permet également :
a) d'augmenter la sensibilité du système de communication 0, et/ou
b) d'améliorer le bilan de liaison, et/ou
c) d'augmenter la distance de communication du système 0, et/ou
d) d'assurer une communication bidirectionnelle, par exemple pour des applications à l'Internet des objets, en conservant un niveau de puissance du signal radiofréquence conforme aux régulations de communication (ETSI, FCC, etc.), et/ou
e) d'augmenter le nombre de répétitions du bloc de données originel, pour éviter d'avoir à augmenter la puissance du signal RF émis.

L'invention n'est pas limitée aux modes de réalisations précédemment décrits et s'étend à tous les modes de réalisation couverts par les revendications.

En particulier, une variante du deuxième aspect de l'invention est proposée selon laquelle la boucle itérative sur l'échantillon donné à partir duquel la séquence d'échantillons 24 est sélectionnée 330 et la boucle itérative sur le nombre d'échantillons présumés par bit sont parcourues d'une façon différente de celles énoncées ci-dessus. L'homme du métier reconnaîtra que, en plus de cette variante, les boucles susmentionnées peuvent être parcourues de diverses autres façons. Il est en effet équivalent de considérer un ou plusieurs échantillons de départ pour réaliser la sélection 230, 330 de la séquence d'échantillons 24 susmentionnée, puis de considérer une ou plusieurs valeurs du nombre présumé d'échantillons par bit, avant de considérer un ou plusieurs autres desdits échantillons de départ, etc. Ainsi, une large gamme de possibilités d'imbrication des boucles susmentionnées entre elles est envisageable. Par ailleurs, parmi cette large gamme de possibilités, un choix peut être guidé, soit de façon automatique, soit par un opérateur, pour parvenir à un résultat acceptable, voire optimal, sans avoir nécessairement à parcourir l'ensemble des deux boucles susmentionnées.

Par ailleurs, il est à noter que les données relatives à la synchronisation en fréquence du système de communication 0, données ayant été extraites du signal radiofréquence reçu 205 et liées à la permutation initiale des données numériques à communiquer, sont en général relativement stable, et en particulier plus stable que les données relatives à la synchronisation en phase du système de communication 0. Ce phénomène est susceptible d'être exploité de la façon suivante : d'autres données numériques à communiquer ultérieurement, du moins dans un laps de temps de quelques jours au plus, vont pouvoir être traitées 200 en utilisant les données de synchronisation en fréquence extraites des précédentes données numériques communiquées.

## Revendications

1. Procédé de traitement (100) de données numériques à émettre (135) sous forme d'un signal radiofréquence depuis un émetteur (1) vers un récepteur (2), le procédé de traitement (100) comprenant les étapes suivantes :
a) Regrouper (110) les données numériques dans un bloc de données, dit originel (10), ayant une taille en bits déterminée,
b) Générer (120), à partir du bloc de données originel (10), une pluralité de blocs de données dits secondaires (20), chaque bloc de données secondaire (20) étant obtenu par permutation, selon un algorithme et des paramètres déterminés, des données numériques regroupées dans le bloc originel (10), l'algorithme et les paramètres étant choisis pour minimiser la corrélation entre les blocs secondaires de la pluralité, et
c) Construire (130) une trame de données (22) comprenant une succession d'un nombre déterminé de blocs secondaires (20) parmi la pluralité de blocs secondaires précédemment générée, la trame ainsi construite définissant le signal radiofréquence à émettre.

2. Procédé de traitement (100) selon la revendication précédente, dans lequel la trame de données (22) ne comprend que ladite succession de blocs secondaires (20), et est exempte d'autres données telles que des données constituant un mot de préambule.

3. Procédé de traitement (100) selon l'une quelconque des revendications précédentes, dans lequel les blocs de données secondaires (20) de la trame de données (22) sont adjacents deux à deux.

4. Procédé de traitement (100) selon l'une quelconque des revendications précédentes, dans lequel l'étape consistant à générer (120) une pluralité de blocs de données secondaires (20) comprend les sous-étapes consistant à :
a) Découper (122) le bloc de données originel (10) en au moins trois sous-blocs (12) de sorte qu'au moins un sous-bloc (12) comprenne au moins deux bits, au moins deux sous-blocs comprenant potentiellement un nombre différent de bits, et
b) Permuter (124) les sous-blocs entre eux,
ces sous-étapes (122, 124) pouvant être répétées en variant le nombre de sous-blocs et/ou le nombre de bits d'au moins deux sous-blocs.

5. Procédé de traitement (200) d'un signal radiofréquence reçu (205) par un récepteur (2), le signal radiofréquence ayant été défini à partir d'une trame de données (22) comprenant une succession d'un nombre déterminé de blocs de données dits secondaires (20), chaque bloc de données secondaire (20) ayant été obtenu par permutation, selon un algorithme et des paramètres déterminés, de données numériques préalablement regroupées dans un bloc dit originel (10) ayant une taille en bits déterminée, le procédé de traitement (200) comprenant les étapes suivantes :
a) Échantillonner (210) le signal radiofréquence avec une fréquence de sur-échantillonnage définie par le récepteur (2),
b) Enregistrer (220) au fur et à mesure les échantillons dans une mémoire tampon (21),
c) Parmi une série d'échantillons (23) enregistrés ayant une taille au moins égale à la taille en bits de chaque bloc secondaire (20) que multiplie le nombre de blocs secondaires (20) dans la trame de données (22) et pour un nombre présumé d'échantillons par bit choisi parmi un ensemble comprenant une valeur nominale correspondant à une fréquence de sur-échantillonnage nominale du récepteur, au moins une valeur inférieure à ladite valeur nominale et au moins une valeur supérieure à ladite valeur nominale :
i. Sélectionner (230) une séquence d'échantillons (24) à partir d'un échantillon donné et à intervalle régulier de taille égale audit nombre présumé d'échantillons par bit,
ii. Séparer (232) la séquence d'échantillons (24) sélectionnée en un nombre de blocs d'échantillons dits tertiaires (30) égal au nombre de blocs secondaires (20) dans la trame de données (22),
iii. Pour chaque bloc tertiaire (30), générer (234) un bloc d'échantillons dit quaternaire (40) par permutation des échantillons du bloc tertiaire (30) entre eux, cette permutation étant l'inverse de celle effectuée sur le bloc originel (10) pour obtenir le bloc secondaire (20) correspondant, puis
iv. Répartir (236) les blocs quaternaires (40) en au moins deux groupes,
v. Par groupe, calculer (238) un bloc dit moyen (50) à partir des blocs quaternaires (40),
vi. Calculer (240) une mesure de corrélation (26) entre chaque paire de blocs moyens (50) précédemment calculés,
vii. Sauvegarder (242) la ou les mesures de corrélation (26) précédemment calculées, en associant chaque mesure de corrélation (26) à un indice de l'échantillon à partir duquel la sélection (230) a été réalisée et au nombre présumé d'échantillons par bit, puis
viii. Recommencer (244) les étapes i à vii à partir d'au moins un autre échantillon que l'échantillon à partir duquel la précédente sélection a été réalisée,
d) Pour au moins une autre valeur du nombre présumé d'échantillons par bit choisie parmi l'ensemble comprenant une valeur nominale correspondant à une fréquence de sur-échantillonnage nominale du récepteur, au moins une valeur inférieure à ladite valeur nominale et au moins une valeur supérieure à ladite valeur nominale, recommencer (250) l'étape c, de sorte à sauvegarder (242) les mesures de corrélation (26) calculées (240), en associant chaque mesure de corrélation (26) à l'indice de l'échantillon à partir duquel la sélection (230) a été réalisée et au nombre présumé d'échantillons par bit considéré,
e) Déterminer (260), parmi les mesures de corrélation (26) sauvegardées (242), la mesure de corrélation (26) correspondant à une plus grande corrélation entre blocs moyens (50), et récupérer (262) l'indice de l'échantillon et le nombre présumé d'échantillons par bit associés à cette mesure de corrélation (26), puis
f) Identifier (270) la séquence d'échantillons sélectionnée à partir de l'indice de l'échantillon associé à cette mesure de corrélation (26) et à intervalle régulier de taille égale au nombre présumé d'échantillons par bit associé à cette mesure de corrélation (26), comme étant représentative d'une succession de blocs de données originels (10) correspondant à la succession de blocs secondaires (20) à partir de laquelle la trame de données (22) a été construite.

6. Procédé de traitement (300) d'un signal radiofréquence reçu (305) par un récepteur (2), le signal radiofréquence ayant été défini à partir d'une trame de données (22) comprenant une succession d'un nombre déterminé de blocs de données dits secondaires (20), chaque bloc de données secondaire (20) ayant été obtenu par permutation, selon un algorithme et des paramètres déterminés, de données numériques préalablement regroupées dans un bloc dit originel (10) ayant une taille en bits déterminée, le procédé de traitement (300) comprenant les étapes suivantes :
a) Échantillonner (310) le signal radiofréquence avec une fréquence de sur-échantillonnage définie par le récepteur,
b) Enregistrer (320) au fur et à mesure les échantillons dans une mémoire tampon,
c) Parmi une série d'échantillons enregistrés ayant une taille au moins égale à la taille en bits de chaque bloc secondaire (20) que multiplie le nombre de blocs secondaires (20) dans la trame de données (22) et un nombre présumé d'échantillons par bit choisi parmi un ensemble comprenant une valeur nominale correspondant à une fréquence de sur-échantillonnage nominale du récepteur, au moins une valeur inférieure à ladite valeur nominale et au moins une valeur supérieure à ladite valeur nominale :
i. Sélectionner (330) une séquence d'échantillons (24) à intervalle régulier de taille égale audit nombre présumé d'échantillons par bit,
ii. Séparer (332) la séquence d'échantillons (24) sélectionnée en un nombre de blocs d'échantillons dits tertiaires (30) égal au nombre de blocs secondaires (20) dans la trame de données (22),
iii. Pour chaque bloc tertiaire (30), générer (334) un bloc d'échantillons dit quaternaire (40) par permutation des échantillons du bloc tertiaire (30) entre eux, cette permutation étant l'inverse de celle effectuée sur le bloc originel (10) pour obtenir le bloc secondaire (20) correspondant, puis
iv. Répartir (336) les blocs quaternaires (40) en au moins deux groupes,
v. Par groupe, calculer (338) un bloc dit moyen (50) à partir des blocs quaternaires (40),
vi. Calculer (340) une mesure de corrélation (26) entre chaque paire de blocs moyens (50) précédemment calculés,
vii. Sauvegarder (342) la ou les mesures de corrélation (26) précédemment calculées, en associant chaque mesure de corrélation (26) à un indice de l'échantillon à partir duquel la sélection (330) a été réalisée et au nombre présumé d'échantillons par bit, puis
viii. Recommencer (344) les étapes i à vii, pour au moins une autre valeur du nombre présumé d'échantillons par bit que celle avec laquelle la précédente sélection a été réalisée,
d) Recommencer (350) l'étape c à partir d'au moins un autre échantillon que l'échantillon précédemment considéré, de sorte à sauvegarder (342) les mesures de corrélation (26) calculées (340), en associant chaque mesure de corrélation (26) à l'indice de l'échantillon à partir duquel l'étape c est recommencée et au nombre présumé d'échantillons par bit considéré,
e) Déterminer (360), parmi les mesures de corrélation (26) sauvegardées (342), la mesure de corrélation (26) correspondant à une plus grande corrélation entre blocs moyens (50), et récupérer (362) l'indice de l'échantillon et le nombre présumé d'échantillons par bit associés à cette mesure de corrélation (26), puis
f) Identifier (370) la séquence d'échantillons (24) sélectionnée (330) à partir de l'indice de l'échantillon associé à cette mesure de corrélation (26) et à intervalle régulier de taille égale au nombre présumé d'échantillons par bit associé à cette mesure de corrélation (26), comme étant représentative d'une succession de blocs de données originels (10) correspondant à la succession de blocs de données secondaires (20) à partir de laquelle la trame de données (22) a été construite.

7. Procédé de traitement (200, 300) selon la revendication 5 ou la revendication 6, dans lequel ledit échantillon donné est initialement le premier échantillon enregistré dans la mémoire tampon.

8. Procédé de traitement (200) selon la revendication 5, dans lequel les étapes i à vii sont recommencées (244) à partir d'un échantillon suivant l'échantillon à partir duquel la précédente sélection (230) a été réalisée.

9. Procédé de traitement (300) selon la revendication 6, dans lequel l'étape c est recommencée (350) à partir d'un échantillon suivant l'échantillon à partir duquel les étapes i à vii ont précédemment été recommencées (344).

10. Procédé de traitement (200, 300) selon l'une quelconque des revendications 5 à 9, dans lequel, les blocs quaternaires (40) étant répartis en plus de deux groupes, l'étape consistant à calculer (240, 340) au moins une mesure de corrélation (26) entre chaque paire de blocs moyens (50) précédemment calculés (238, 338) comprend en outre le calcul (241, 341) d'une mesure de corrélation (26) par moyennage des mesures de corrélation (26) entre paires de blocs moyens (50).

11. Procédé de traitement (200, 300) selon l'une quelconque des revendications 5 à 10, dans lequel l'étape f est suivie d'une étape de détermination (280, 380) des données numériques par moyennage synchronisé sur la séquence d'échantillons (24) identifiée à l'étape f.

12. Produit programme d'ordinateur comprenant des instructions, qui lorsqu'elles sont effectuées par au moins un processeur, exécute au moins les étapes du procédé de traitement (100) selon l'une quelconque des revendications 1 à 4.

13. Produit programme d'ordinateur comprenant des instructions, qui lorsqu'elles sont effectuées par au moins un processeur, exécute au moins les étapes du procédé de traitement (200, 300) selon la revendication 5 ou la revendication 6, le cas échéant en combinaison avec l'une quelconque des revendications 7 à 11.

14. Système de communication (0) comprenant au moins un émetteur (1) configuré pour mettre en oeuvre le procédé de traitement (100) selon l'une quelconque des revendications 1 à 4 et au moins un récepteur (2) configuré pour mettre en oeuvre le procédé de traitement (200, 300) selon la revendication 5 ou la revendication 6, le cas échéant en combinaison avec l'une quelconque des revendications 7 à 11.

## Patentansprüche

1. Verfahren zum Verarbeiten (100) zu sendender digitaler Daten (135) in Form eines Radiofrequenzsignals von einem Sender (1) zu einem Empfänger (2), wobei das Verfahren zum Verarbeiten (100) die folgenden Schritte umfasst:
a) Zusammenfassen (110) der digitalen Daten in einem sogenannten ursprünglichen Datensatz (10), welcher eine bestimmte Bit-Größe aufweist,
b) Generieren (120) aus dem ursprünglichen Datensatz (10) einer Vielzahl von sogenannten sekundären Datensätzen (20), wobei jeder sekundäre Datensatz (20) durch Permutation gemäß einem Algorithmus und bestimmten Parametern der in dem ursprünglichen Satz (10) zusammengefassten digitalen Daten erhalten wird, wobei der Algorithmus und die bestimmten Parameter ausgewählt sind, um die Korrelation zwischen den sekundären Sätzen aus der Vielzahl zu minimieren, und
c) Aufbauen (130) eines Datenrahmens (22), der eine Aufeinanderfolge einer bestimmten Anzahl an sekundären Sätzen (20) aus der zuvor generierten Vielzahl von sekundären Sätzen umfasst, wobei der so aufgebaute Rahmen das zu sendende Radiofrequenzsignal definiert.

2. Verfahren zum Verarbeiten (100) nach dem vorstehenden Anspruch, wobei der Datenrahmen (22) nur die Aufeinanderfolge von sekundären Sätzen (20) umfasst, und frei von sonstigen Daten, wie Daten, die ein Präambelwort darstellen, ist.

3. Verfahren zum Verarbeiten (100) nach einem der vorstehenden Ansprüche, wobei die sekundären Datensätze (20) des Datenrahmens (22) paarweise aneinander angrenzend sind.

4. Verfahren zum Verarbeiten (100) nach einem der vorstehenden Ansprüche, wobei der Schritt, der darin besteht, eine Vielzahl von sekundären Datensätzen (20) zu generieren (120), die Teilschritte umfasst, die darin bestehen:
a) den ursprünglichen Datensatz (10) in mindestens drei Teilsätze (12) zu zerlegen (122), sodass mindestens ein Teilsatz (12) mindestens zwei Bits umfasst, wobei mindestens zwei Teilsätze möglicherweise eine unterschiedliche Anzahl an Bits umfassen, und
b) Permutieren (124) der Teilsätze untereinander,
wobei diese Teilschritte (122, 124) durch Variieren der Anzahl an Teilsätzen und/oder der Anzahl an Bits von mindestens zwei Teilsätzen wiederholt werden können.

5. Verfahren zum Verarbeiten (200) eines durch einen Empfänger (2) empfangenen Radiofrequenzsignals (205), wobei das Radiofrequenzsignal aus einem Datenrahmen (22) definiert worden ist, der eine Aufeinanderfolge einer bestimmten Anzahl an sogenannten sekundären Datensätzen (20) umfasst, wobei jeder sekundäre Datensatz (20) durch Permutation gemäß einem Algorithmus und bestimmten Parametern von zuvor in einem ursprünglichen Satz (10) zusammengefassten digitalen Daten erhalten worden ist, der eine bestimmte Bit-Größe aufweist, wobei das Verfahren zum Verarbeiten (200) die folgenden Schritte umfasst:
a) Abtasten (210) des Radiofrequenzsignals mit einer vom Empfänger (2) definierten Überabtastfrequenz,
b) schrittweise Speichern (220) der Abtastwerte in einem Zwischenspeicher (21),
c) aus einer Reihe von gespeicherten Abtastwerten (23), die eine Größe von mindestens gleich der Bit-Größe eines jeden sekundären Satzes (20) aufweisen, welche die Anzahl an sekundären Sätzen (20) in dem Datenrahmen (22) multipliziert, und für eine angenommene Anzahl an Abtastwerten je Bit, die aus einer Einheit ausgewählt wird, die einen Nennwert umfasst, der einer nominalen Überabtastfrequenz des Empfängers entspricht, mindestens einen Wert kleiner als der Nennwert, und mindestens einen Wert größer als der Nennwert:
i. Auswählen (230) einer Folge von Abtastwerten (24) ausgehend von einem gegebenen Abtastwert und im regelmäßigen Intervall mit einer Größe gleich der angenommenen Anzahl an Abtastwerten je Bit,
ii. Trennen (232) der ausgewählten Folge von Abtastwerten (24) in eine Anzahl an sogenannten tertiären Sätzen von Abtastwerten (30) gleich der Anzahl an sekundären Sätzen (20) in dem Datenrahmen (22),
iii. für jeden tertiären Satz (30) Generieren (234) eines quartär genannten Satzes von Abtastwerten (40) durch Permutieren der Abtastwerte des tertiären Satzes (30) untereinander, wobei diese Permutation das Gegenteil von jener ist, die am ursprünglichen Satz (10) durchgeführt wird, um den entsprechenden sekundären Satz (20) zu erhalten, danach
iv. Aufteilen (236) der quartären Sätze (40) in mindestens zwei Gruppen,
v. Je Gruppe Berechnen (238) eines sogenannten mittleren Satzes (50) aus den quartären Sätzen (40),
vi. Berechnen (240) einer Korrelationsmessung (26) zwischen jedem Paar an zuvor berechneten mittleren Sätzen (50),
vii. Sichern (242) der zuvor berechneten Korrelationsmessung(en) (26) durch Verknüpfen einer jeden Korrelationsmessung (26) mit einem Index des Abtastwertes, aus dem die Auswahl (230) vorgenommen worden ist, und der angenommenen Anzahl an Abtastwerten je Bit, danach
viii. von vorne Anfangen (244) der Schritte i. bis vii. aus mindestens einem anderen Abtastwert als dem Abtastwert, aus dem die vorherige Auswahl getroffen worden ist,
d) für mindestens einen anderen Wert der angenommenen Anzahl an Abtastwerten je Bit, der aus der Einheit ausgewählt ist, die einen Nennwert umfasst, der einer nominalen Überabtastfrequenz des Empfängers entspricht, mindestens einen Wert kleiner als der Nennwert, und mindestens einen Wert größer als der Nennwert, von vorne Anfangen (250) von Schritt c, um die berechneten (240) Korrelationsmessungen (26) zu sichern (242), indem jede Korrelationsmessung (26) mit dem Index des Abtastwertes, aus dem die Auswahl (230) vorgenommen worden ist, und der betrachteten angenommenen Anzahl an Abtastwerten je Bit verknüpft wird,
e) Bestimmen (260) aus den gesicherten Korrelationsmessungen (26) (242) jener Korrelationsmessung (26), die einer größeren Korrelation zwischen mittleren Sätzen (50) entspricht, und Herausbekommen (262) des Index des Abtastwertes und der angenommenen Anzahl an Abtastwerten je Bit, die mit dieser Korrelationsmessung (26) verknüpft sind, danach
f) Identifizieren (270) der ausgewählten Folge von Abtastwerten aus dem Index des Abtastwertes, der mit dieser Korrelationsmessung (26) verknüpft ist, und im regelmäßigen Intervall mit einer Größe gleich der angenommenen Anzahl an Abtastwerten je Bit, die mit dieser Korrelationsmessung (26) verknüpft ist, als solche, die repräsentativ für eine Aufeinanderfolge von ursprünglichen Datensätzen (10) ist, die der Aufeinanderfolge von sekundären Sätzen (20) entspricht, aus der der Datenrahmen (22) aufgebaut worden ist.

6. Verfahren zum Verarbeiten (300) eines durch einen Empfänger (2) empfangenen Radiofrequenzsignals (305), wobei das Radiofrequenzsignal aus einem Datenrahmen (22) definiert worden ist, der eine Aufeinanderfolge einer bestimmten Anzahl an sogenannten sekundären Datensätzen (20) umfasst, wobei jeder sekundäre Datensatz (20) durch Permutation gemäß einem Algorithmus und bestimmten Parametern von zuvor in einem ursprünglichen Satz (10) zusammengefassten digitalen Daten erhalten worden ist, der eine bestimmte Bit-Größe aufweist, wobei das Verfahren zum Verarbeiten (300) die folgenden Schritte umfasst:
a) Abtasten (310) des Radiofrequenzsignals mit einer vom Empfänger definierten Überabtastfrequenz,
b) schrittweise Speichern (320) der Abtastwerte in einem Zwischenspeicher,
c) aus einer Reihe von gespeicherten Abtastwerten, die eine Größe mindestens gleich der Bit-Größe eines jeden sekundären Satzes (20) aufweisen, welche die Anzahl an sekundären Sätzen (20) in dem Datenrahmen (22) multipliziert, und einer angenommenen Anzahl an Abtastwerten je Bit, die aus einer Einheit ausgewählt ist, die einen Nennwert umfasst, der einer nominalen Überabtastfrequenz des Empfängers entspricht, mindestens einen Wert kleiner als der Nennwert, und mindestens einen Wert größer als der Nennwert:
i. Auswählen (330) einer Folge von Abtastwerten (24) im regelmäßigen Intervall mit einer Größe gleich der angenommenen Anzahl an Abtastwerten je Bit,
ii. Trennen (332) der ausgewählten Folge von Abtastwerten (24) in eine Anzahl an sogenannten tertiären Sätzen von Abtastwerten (30) gleich der Anzahl an sekundären Sätzen (20) in dem Datenrahmen (22),
iii. für jeden tertiären Satz (30) Generieren (334) eines quartär genannten Satzes von Abtastwerten (40) durch Permutieren der Abtastwerte des tertiären Satzes (30) untereinander, wobei diese Permutation das Gegenteil von jener ist, die am ursprünglichen Satz (10) durchgeführt wird, um den entsprechenden sekundären Satz (20) zu erhalten, danach
iv. Aufteilen (336) der quartären Sätze (40) in mindestens zwei Gruppen,
v. je Gruppe Berechnen (338) eines sogenannten mittleren Satzes (50) aus den quartären Sätzen (40),
vi. Berechnen (340) einer Korrelationsmessung (26) zwischen jedem Paar an zuvor berechneten mittleren Sätzen (50),
vii. Sichern (342) der zuvor berechneten Korrelationsmessung(en) (26) durch Verknüpfen einer jeden Korrelationsmessung (26) mit einem Index des Abtastwertes, aus dem die Auswahl (330) vorgenommen worden ist, und der angenommenen Anzahl an Abtastwerten je Bit, danach
viii. von vorne Anfangen (344) der Schritte i. bis vii. für mindestens einen anderen Wert der angenommenen Anzahl an Abtastwerten je Bit, als jenem, mit dem die vorherige Auswahl getroffen worden ist,
d) von vorne Anfangen (350) des Schrittes c, ab mindestens einem anderen Abtastwert, als dem zuvor angenommenen Abtastwert, um die berechneten (340) Korrelationsmessungen (26) zu sichern (342), indem jede Korrelationsmessung (26) mit dem Index des Abtastwertes, ab dem der Schritt c von vorne angefangen wird, und der angenommenen Anzahl an Abtastwerten je Bit verknüpft wird,
e) Bestimmen (360) aus den gesicherten (342) Korrelationsmessungen (26) jener Korrelationsmessung (26), die einer größeren Korrelation zwischen mittleren Sätzen (50) entspricht, und Zurückerhalten (362) des Index des Abtastwertes und der angenommenen Anzahl an Abtastwerten je Bit, die mit dieser Korrelationsmessung (26) verknüpft sind, danach
f) Identifizieren (370) der Folge von Abtastwerten (24), die aus dem Index des Abtastwertes ausgewählt (330) wird, der mit dieser Korrelationsmessung (26) verknüpft ist, und im regelmäßigen Intervall mit einer Größe gleich der angenommenen Anzahl an Abtastwerten je Bit, die mit dieser Korrelationsmessung (26) verknüpft ist, als solche, die repräsentativ für eine Aufeinanderfolge von ursprünglichen Datensätzen (10) ist, die der Aufeinanderfolge von sekundären Sätzen (20) entspricht, aus der der Datenrahmen (22) aufgebaut worden ist.

7. Verfahren zum Verarbeiten (200, 300) nach Anspruch 5 oder Anspruch 6, wobei der gegebene Abtastwert ursprünglich der erste im Zwischenspeicher gespeicherte Abtastwert ist.

8. Verfahren zum Verarbeiten (200) nach Anspruch 5, wobei die Schritte i bis vii ab einem Abtastwert nach jenem Abtastwert von vorne angefangen werden (244), ab dem die vorhergehende Auswahl (230) vorgenommen worden ist.

9. Verfahren zum Verarbeiten (300) nach Anspruch 6, wobei der Schritt c ab einem Abtastwert nach jenem Abtastwert von vorne angefangen wird (350), ab dem die Schritte i bis vii zuvor von vorne angefangen (344) worden sind.

10. Verfahren zum Verarbeiten (200, 300) nach einem der Ansprüche 5 bis 9, wobei, da die quartären Sätze (40) in mehr als zwei Gruppen aufgeteilt sind, der Schritt, der darin besteht, mindestens eine Korrelationsmessung (26) zwischen jedem zuvor berechneten (238, 338) Paar an mittleren Sätzen (50) zu berechnen (240, 340), weiter das Berechnen (241, 341) einer Korrelationsmessung (26) durch Mitteln der Korrelationsmessungen (26) zwischen Paaren an mittleren Sätzen (50) umfasst.

11. Verfahren zum Verarbeiten (200, 300) nach einem der Ansprüche 5 bis 10, wobei auf den Schritt f ein Schritt des Bestimmens (280, 380) der digitalen Daten durch synchronisiertes Mitteln der in Schritt f identifizierten Folge von Abtastwerten (24) folgt.

12. Computerprogrammprodukt, das Anweisungen umfasst, die, wenn sie von mindestens einem Prozessor ausgeführt werden, mindestens die Schritte des Verfahrens zum Verarbeiten (100) nach einem der Ansprüche 1 bis 4 ausführt.

13. Computerprogrammprodukt, das Anweisungen umfasst, die, wenn sie von mindestens einem Prozessor ausgeführt werden, mindestens die Schritte des Verfahrens zum Verarbeiten (200, 300) nach Anspruch 5 oder Anspruch 6, gegebenenfalls in Kombination mit einem der Ansprüche 7 bis 11 ausführt.

14. Kommunikationssystem (0), das mindestens einen Sender (1) umfasst, der konfiguriert ist, um das Verfahren zum Verarbeiten (100) nach einem der Ansprüche 1 bis 4 umzusetzen, und mindestens einen Empfänger (2), der konfiguriert ist, um das Verfahren zum Verarbeiten (200, 300) nach Anspruch 5 oder Anspruch 6, gegebenenfalls in Kombination mit einem der Ansprüche 7 bis 11 umzusetzen.

## Claims

1. A method (100) for processing digital data to be transmitted (135) in the form of a radiofrequency signal from a transmitter (1) towards a receiver (2), the processing method (100) comprising the following steps:
a) grouping (110) the digital data into a data block, so-called original data block (10), having a determined bit size,
b) generating (120), based on the original data block (10), a plurality of so-called secondary data blocks (20), each secondary data block (20) being obtained by permutation, according to an algorithm and determined parameters, of the digital data grouped together in the original block (10), the algorithm and the parameters being selected to minimise the correlation between the secondary blocks of the plurality, and
c) building (130) a data frame (22) comprising a series of a determined number of secondary blocks (20) from the plurality of previously generated secondary blocks, the frame thus built defining the radiofrequency signal to be transmitted.

2. The processing method (100) according to the preceding claim, wherein the data frame (22) comprises only said series of secondary blocks (20), and is free of other data such as data forming a preamble word.

3. The processing method (100) according to any one of the preceding claims, wherein the secondary data blocks (20) of the data frame (22) are adjacent two by two.

4. The processing method (100) according to any one of the preceding claims, wherein the step (120) of generating a plurality of secondary data blocks (20) comprises the sub-steps of:
a) cutting (122) the original data block (10) into at least three sub-blocks (12) so that at least one sub-block (12) comprises at least two bits, at least two sub-blocks potentially comprising a different number of bits, and
b) permuting (124) the sub-blocks with each other,
these sub-steps (122, 124) could be repeated by varying the number of sub-blocks and/or the number of bits of at least two sub-blocks.

5. A method (200) for processing a radiofrequency signal (205) received by a receiver (2), the radiofrequency signal having been defined based on a data frame (22) comprising a series of a determined number of data blocks so-called secondary data block (20), each secondary data block (20) having been obtained by permutation, according to an algorithm and determined parameters, of digital data grouped together beforehand in a so-called original block (10) having a determined bit size, the processing method (200) comprising the following steps of:
a) sampling (210) the radiofrequency signal with an oversampling frequency defined by the receiver (2),
b) recording (220) the samples in a buffer memory (21) as they are sampled,
c) from a series of recorded samples (23) having a size at least equal to the bit size of each secondary block (20) that the number of secondary blocks (20) in the data frame (22) multiplies and for a presumed number of samples per bit selected from a set comprising a nominal value corresponding to a nominal oversampling frequency of the receiver, at least one value lower than said nominal value and at least one value higher than said nominal value:
i. selecting (230) a sequence of samples (24) from a given sample and at a regular interval with a size equal to said presumed number of samples per bit,
ii. separating (232) the selected sample sequence (24) into a number of so-called tertiary sample blocks (30) equal to the number of secondary blocks (20) in the data frame (22),
iii. for each tertiary block (30), generating (234) a so-called quaternary sample block (40) by permutation of the samples of the tertiary block (30) with each other, this permutation being the inverse of that performed on the original block (10) to obtain the corresponding secondary block (20), then
iv. distributing (236) the quaternary blocks (40) into at least two groups,
v. for each group, calculating (238) a so-called average block (50) from the quaternary blocks (40),
vi. calculating (240) a correlation metric (26) between each pair of previously calculated average blocks (50),
vii. saving (242) the previously calculated correlation metric(s) (26), while associating each correlation metric (26) with an index of the sample from which the selection (230) has been carried out and the presumed number of samples per bit, and then
viii. restarting (244) steps i to vii from at least one other sample than the sample based on which the previous selection has been carried out,
d) for at least one further value of the presumed number of samples per bit selected from the set comprising a nominal value corresponding to a nominal oversampling frequency of the receiver, at least one value lower than said nominal value and at least one value higher than said nominal value, restarting (250) step c, so as to save (242) the calculated (240) correlation metrics (26), while associating each correlation metric (26) with the index of the sample from which the selection (230) has been carried out and with the presumed number of samples per bit,
e) determining (260), from the saved (242) correlation metrics (26), the correlation metric (26) corresponding to a greater correlation between average blocks (50), and recovering (262) the index of the sample and the presumed number of samples per bit associated with that correlation metric (26), and then
f) identifying (270) the sequence of samples selected from the index of the sample associated with this correlation metric (26) and at a regular interval with a size equal to the presumed number of samples per bit associated with this correlation metric (26), as being representative of a series of original data blocks (10) corresponding to the series of secondary blocks (20) based on which the data frame (22) has been built.

6. A method (300) for processing a radiofrequency signal (305) received by a receiver (2), the radiofrequency signal having been defined based on a data frame (22) comprising a series of a determined number of so-called secondary data blocks (20), each secondary data block (20) having been obtained by permutation, according to an algorithm and determined parameters, of digital data previously grouped together in a so-called original block (10) having a determined bit size, the processing method (300) comprising the following steps of:
a) sampling (310) the radiofrequency signal with an oversampling frequency defined by the receiver,
b) recording (320) the samples in a buffer memory as they are sampled,
c) from a series of recorded samples having a size at least equal to the bit size of each secondary block (20) that the number of secondary blocks (20) in the data frame (22) multiplies and a presumed number of samples per bit selected from a set comprising a nominal value corresponding to a nominal oversampling frequency of the receiver, at least one value lower than said nominal value and at least one value higher than said nominal value:
i. selecting (330) a sequence of samples (24) at a regular interval with a size equal to said presumed number of samples per bit,
ii. separating (332) the selected sample sequence (24) into a number of so-tertiary sample blocks (30) equal to the number of secondary blocks (20) in the data frame (22),
iii. for each tertiary block (30), generating (334) a so-called quaternary sample block (40) by permutation of the samples of the tertiary block (30) with each other, this permutation being the inverse of that performed on the original block (10) to obtain the corresponding secondary block (20), then
iv. distributing (336) the quaternary blocks (40) into at least two groups,
v. for each, calculating (338) a so-called average block (50) based on the quaternary blocks (40),
vi. calculating (340) a correlation metric (26) between each pair of previously calculated average blocks (50),
vii. saving (342) the previously calculated correlation metric(s) (26), by associating each correlation metric (26) with an index of the sample from which the selection (330) has been carried out and the presumed number of samples per bit, and then
viii. restarting (344) steps i to vii, for at least one other value of the presumed number of samples per bit than that with which the previous selection has been carried out,
d) restarting (350) step c from at least one other sample than the previously considered sample, so as to save (342) the calculated (340) correlation metrics (26), while associating each correlation metric (26) with the index of the sample from which step c is restarted and with the presumed number of samples per bit,
e) determining (360), from the saved (342) correlation metrics (26), the correlation metric (26) corresponding to a greater correlation between average blocks (50), and recovering (362) the index of the sample and the presumed number of samples per bit associated with that correlation metric (26), and then
f) identifying (370) the sequence of samples (24) selected (330) from the index of the sample associated with that correlation metric (26) and at a regular interval with a size equal to the presumed number of samples per bit associated with this correlation metric (26), as being representative of a series of original data blocks (10) corresponding to the series of secondary data blocks (20) based on which the data frame (22) has been built.

7. The processing method (200, 300) according to claim 5 or claim 6, wherein said given sample is initially the first sample recorded in the buffer memory.

8. The processing method (200) according to claim 5, wherein steps i to vii are restarted (244) based on a sample following the sample based on which the previous selection (230) has been carried out.

9. The processing method (300) according to claim 6, wherein step c is restarted (350) based on a sample following the sample based on which steps i to vii have previously been restarted (344).

10. The processing method (200, 300) according to any one of claims 5 to 9, wherein, the quaternary blocks (40) being distributed in addition to two groups, the step (240, 340) of calculating at least one correlation metric (26) between each pair of previously calculated (238, 338) average blocks (50) further comprises calculating (241, 341) of a correlation metric (26) by averaging the correlation metrics (26) between pairs of average blocks (50).

11. The processing method (200, 300) according to any one of claims 5 to 10, wherein step f is followed by a step (280, 380) of determining the digital data by averaging synchronised on the sequence of samples (24) identified in step f.

12. A computer program product comprising instructions which, when performed by at least one processor, executes at least the steps of the processing method (100) according to any one of claims 1 to 4.

13. A computer program product comprising instructions which, when performed by at least one processor, executes at least the steps of the processing method (200, 300) according to claim 5 or claim 6, where appropriate in combination with any one of claims 7 to 11.

14. A communication system (0) comprising at least one transmitter (1) configured to implement the processing method (100) according to any one of claims 1 to 4 and at least one receiver (2) configured to implement the processing method (200, 300) according to claim 5 or claim 6, where appropriate in combination with any one of claims 7 to 11.
